(19) Europäisches Patentamt
European Patent Office
Office européen des brevets

(11) **EP 0 717 720 B1**

(12) **EUROPEAN PATENT SPECIFICATION**

(45) Date of publication and mention
of the grant of the patent:
**13.03.2002 Bulletin 2002/11**

(21) Application number: **94925322.3**

(22) Date of filing: **31.08.1994**

(51) Int Cl.$^7$: **C01B 17/02**, C01B 17/04

(86) International application number:
**PCT/CA94/00481**

(87) International publication number:
**WO 95/06616 (09.03.1995 Gazette 1995/11)**

(54) **LIQUID SULFUR DEGASSING**

ENTGASUNG VON FLÜSSIGEM SCHWEFEL

DEGAZAGE DU SOUFRE LIQUIDE

(84) Designated Contracting States:
**AT BE CH DE DK ES FR GB GR IE IT LI LU MC NL PT SE**

(30) Priority: **01.09.1993 GB 9318122**
**25.02.1994 GB 9403709**

(43) Date of publication of application:
**26.06.1996 Bulletin 1996/26**

(73) Proprietors:
• **APOLLO ENVIRONMENTAL SYSTEMS CORP.**
**Willowdale, Ontario M2J 5A2 (CA)**
• **PROCOR SULPHUR SERVICES INC.**
**Calgary, Alberta T2W 3X6 (CA)**

(72) Inventors:
• **ELLENOR, David, Todd, R.**
**Scarborough, Ontario M1N 2R5 (CA)**
• **SMITH, James, W.**
**Toronto, Ontario M4G 1L8 (CA)**
• **HARBINSON, John, H.**
**Scarborough, Ontario M1V 1A1 (CA)**
• **DE PAOLI, Sergio**
**Calgary, Alberta T2J 5C3 (CA)**

(74) Representative: **Raynor, John**
**W.H. Beck, Greener & Co**
**7 Stone Buildings**
**Lincoln's Inn**
**London WC2A 3SZ (GB)**

(56) References cited:
**EP-A- 0 030 447**     **EP-A- 0 252 836**
**WO-A-91/08038**      **FR-A- 1 336 701**
**FR-A- 2 185 587**

• **CHEMICAL ABSTRACTS, vol. 116, no. 2, January 1992, Columbus, Ohio, US; abstract no. 8466r, H.J. KLOCKOW ET AL. 'Apparatus for removing residual gas from molten sulfur.' page 107 ; & DD,A,292 635 (INGENIEURBETRIEB ANLAGENBAU LEIPZIG)) 8 August 1991**
• **CHEMICAL ABSTRACTS, vol. 101, no. 14, October 1984, Columbus, Ohio, US; abstract no. 113219a, F.R. ISMAGILOV ET AL. 'Removal of hydrogen sulfide from liquid sulfur.' page 123 ; & SU,A,1 104 105 (VOLGA-URAL SCIENT. RES INST.) 23 July 1984**
• **SULPHUR, vol.233, no.4, August 1994, LONDON (GB) pages 35 - 45 'Controlling H2S evolution from sulphur.'**

**Description**

FIELD OF INVENTION

The present invention is directed to the removal of hydrogen sulfide and hydrogen polysulfides from liquid sulfur in rapid and efficient manner.

BACKGROUND OF THE INVENTION

Hydrogen sulfide is a product which may be recovered during the production of natural gas, refining operations, or as a byproduct of a number of industrial operations. In many cases the hydrogen sulfide is converted to elemental sulfur by the Claus process. The basic chemistry of the Claus process is as follows:

$$H_2S + 3/2\ O_2 \rightarrow SO_2 + H_2O$$

$$2H_2S + SO_2 \rightleftarrows 3/8\ S_8 + 2H_2O$$

Hydrogen sulfide is, to a limited degree, soluble in liquid sulfur. This dissolved hydrogen sulfide may react with the sulfur diradical chain species to form hydrogen polysulfides, as follows:

$$H_2S + \cdot S_{x-1} \cdot \rightleftarrows H_2S_x$$

Liquid sulfur produced by the Claus process may contain from 50 to 550 ppmw of hydrogen sulfide species. The hydrogen sulfide and hydrogen polysulfides slowly reach an equilibrium in the liquid sulfur which is substantially influenced by temperature. Over time, the hydrogen sulfide diffuses out of the liquid sulfur, or in cases where the sulfur has been solidified, out of the solid product. Under ambient conditions, it can take weeks for the hydrogen polysulfides to decompose to sulfur and hydrogen sulfide. The release of these hydrogen sulfide emissions may create a variety of nuisance, environmental and safety concerns, if not properly controlled. Examples of such concerns are:

- hydrogen sulfide concentrations can build up to lethal and explosive limits in the headspace when liquid or formed sulfur is stored or shipped within an enclosed space.
- low levels of hydrogen sulfide emissions coming off sulfur storage facilities can be environmentally objectionable due to the low odour threshold of only 0.003 to 0.02 ppmw (ref. 1).
- liquid sulfur is often processed into a solid formed product for transportation purposes, and very often hydrogen sulfide is released to the atmosphere during such forming, storage and transportation operations.

Over the years many systems have been designed to remove hydrogen sulfide and hydrogen polysulfides from liquid sulfur. A review of the prior art reveals that some systems favour the use of reagents or catalysts to effect the removal, while others use air or gas and agitation of the liquid sulfur to promote the release of hydrogen sulfide. It has been found that the use of some catalysts or reagents, such as urea, may assist in the removal of hydrogen sulfide, but it is believed that the friability of formed sulfur product may be impacted negatively by these compounds. Many systems use large vessels to hold the liquid sulfur and sparge air or an inert gas through the liquid sulfur to provide circulation and a carrier gas to remove the hydrogen sulfide from the liquid sulfur. The residence time for such processes generally ranges from several hours to, in some cases, several days. The inert gas may consist of steam or nitrogen, and is generally used to reduce the risk of fire or explosion. In addition, such prior art systems often result in residual hydrogen sulfide and hydrogen polysulfide levels of at least about 50 ppmw.

The prior art also comprises mechanical systems with air or gas sparging which decrease the residence time of the liquid sulfur by increasing the degree of agitation. US-A-Patent No. 4,612,020 describes a system where liquid sulfur is sprayed into two or more chambers, which are joined in series, and the liberated hydrogen sulfide is scavenged from the head space by an inert gas, such as nitrogen. The residence time for the liquid sulfur as noted in this patent varies from 12 to 32 hours. Such residence times require extremely large degassing vessels to be employed. This residence time can be decreased to about 7 hours by using hetrocyclic amine catalysts. The present invention employs a new approach to the degassing of liquid sulfur, which in turn facilitates dramatically reduced residence times. While reference was made earlier to liquid sulfur produced by a Claus plant, the present invention may be applied to liquid sulfur produced by other processes as well.

Searches of the prior art have revealed several patents relating to the removal of hydrogen sulfide from liquid sulfur and the use of various catalyst materials in such procedures, as described above. As a result of such searches, the applicants are aware of the following references:

US-A-3,364,655   US-A-3,447,903   US-A-3,807,141
US-A-4,131,439   US-A-4,612,020   US-A-4,755,372
US-A-4,844,720   US-A-4,849,204   US-A-5,030,438
US-A-5,080,695   GB 1,067,815   CA 964,040

SUMMARY OF INVENTION

The present invention provides an improved procedure for the removal of hydrogen sulfide and hydrogen polysulfides from liquid sulfur which enables the normal degassing time to be reduced from hours or days to minutes while achieving residual $H_2S$ and $H_2S_x$ levels below 5 ppmw. The procedure of the invention may employ the gas-liquid contactor generally described in US-A-5,174,973 for the removal of a gaseous component from a gas stream in an aqueous system using parameters developed for aqueous systems, but modified for the removal of hydrogen sulfide and hydrogen polysulfides from liquid sulfur.

In one aspect of the present invention, there is provided a method of removing hydrogen sulfide and hydrogen polysulfides from liquid sulfur, which comprises providing a rotary impeller comprising a plurality of blades at a submerged location in the liquid sulfur surrounded by a shroud through which are formed a plurality of openings, feeding a stripping gas for hydrogen sulfide to the submerged location while providing a Bronsted-Lowry base catalyst for the conversion of hydrogen polysulfides to hydrogen sulfide thereat, rotating the impeller about a substantially vertical axis at a speed sufficient to draw liquid sulfur into the interior of the shroud and to distribute the stripping gas as bubbles in the liquid sulfur to the interior of the shroud and to form a gas-liquid mixture of bubbles of the gas in the liquid sulfur contained within the shroud, flowing the gas-liquid mixture from within the interior of shroud through and in contact with the openings to external of the shroud, and removing the stripping gas from the liquid sulfur.

In one preferred aspect, the present invention provides a method of removing hydrogen sulfide and hydrogen polysulfides from liquid sulfur, which comprises a plurality of steps. A rotary impeller comprising a plurality of blades is provided at a submerged location in the liquid sulfur surrounded by a shroud through which are formed a plurality of openings. A stripping gas for stripping hydrogen sulfide from the liquid sulfur is fed to the submerged location. The impeller is rotated about a substantially vertical axis at a speed corresponding to a blade tip velocity ($v_i$) of at least about 150 in/sec (at least about 4 m/s), preferably at least about 350 in/sec (at least about 9 m/s), so as to draw liquid sulfur into the interior of the shroud and to generate sufficient shear forces between the impeller and the plurality of openings in the shroud to distribute the stripping gas as bubbles in the liquid sulfur to the interior of the shroud and to effect intimate contact of the stripping gas and the liquid sulfur at the submerged location so as to form a gas-liquid mixture of bubbles of the stripping gas in the liquid sulfur contained within the shroud while effecting shearing of the gas-liquid mixture within the shroud. The gas-liquid mixture is flowed from within the interior of the shroud through and in contact with the openings to external of the shroud at a gas velocity index (GVI) of at least about 4 per second per opening in the shroud, preferably at least about 18 per second per opening, so as to effect further shearing of the gas-liquid mixture and further intimate contact of the stripping gas and the liquid sulfur.

The gas velocity index (GVI) is determined by the expression:

$$GVI = \frac{QP}{4nA^2}$$

where Q is the volumetric flow rate of gas into the impeller ($m^3$/s), n is the number of openings in the shroud, A is the area of the opening ($m^2$) and P is the length of the perimeter of the opening (m).

The method is carried out:

(a) at an Effective Shear Index (ESI) value of about 1 to about 6000 as determined by the relationship:

$$ESI = \frac{GVI}{v_i} \; X \; \frac{(D_s - D_i)}{2} \; X \; 100$$

where $D_s$ is inside diameter (m) of the shroud and $D_i$ is the outside diameter (m) of the impeller,

(b) at a Shear Effectiveness Index (SEI) value of about 1 to about 25 as determined by the relationship:

$$SEI = \frac{Q}{\pi h D_i v_i} X\ 100$$

where h is the height of the impeller (m), and
(c) at a Density Index (DI) value of about 1 to about 8 as determined by the relationship:

$$DI = \frac{Q}{Q_i}\left[\frac{\rho_L - \rho_g}{\rho_{H2O} - \rho_{air}}\right]$$

where $Q_i$ is the self-induction flow rate of air into water (m³/s), $\rho_L$ is the density of the liquid sulfur (kg/m³), $\rho_g$ is the density of the gas (kg/m³), $\rho_{H2O}$ is the density of water (kg/m³) and $\rho_{air}$ is the density of air (kg/m³).

The accelerated and efficient degassing process provided herein enables equipment size to be significantly decreased for a given mass throughput and avoids the necessity and expense of constructing large holding tanks or storage pits to accommodate the traditional longer degassing residence times. Since small vessels suffice to give the needed residence time, the equipment necessary for effecting the present invention may be very compact in relation to its production rate, and requires a small capital investment and possesses low operating costs.

The process of the invention may be used to effect hydrogen sulfide and hydrogen polysulfide degassing of individual batches of liquid sulfur in a treatment vessel, or, alternatively, to effect degassing of a continuous feed of liquid sulfur to a treatment vessel or a series of treatment vessels.

In the process of the invention, the removal of hydrogen sulfide from the liquid sulfur produced by the stripping gas shifts the equilibrium of the equation:

$$H_2S + S_{x-1} \rightleftarrows H_2S_x$$

to the left, causing decomposition of hydrogen polysulfides. This reaction is catalyzed, as outlined below, by the presence of a Bronsted-Lowry base, with stronger Bronsted-Lowry bases causing a greater catalytic effect. Such Bronsted-Lowry base may be provided by utilizing steam as the stripping gas.

In general, the hydrogen sulfide and hydrogen polysulfide stripping operation is effected in the presence of a strong Bronsted-Lowry base catalyst soluble in the liquid sulfur. Such catalyst may be provided to the interior of the shroud and impeller combination in any convenient manner. For example, the catalyst may be introduced into the liquid sulfur flowing into a treatment vessel and/or may be introduced into the vessel, so as to be transported to the submerged location by the general circulation of liquid sulfur. Alternatively, the catalyst may be transported by any other convenient manner to the liquid sulfur at the submerged location. For example, the catalyst may be injected into the stripping gas or may be injected directly into the vortex of liquid sulfur formed inside the shroud. In this latter procedure, the difference in temperature generally existing between the stripping gas and the liquid sulfur may promote stripping of hydrogen sulfide in the presence of the catalyst. When the stripping operation is carried out in this way, a temperature differential between the cooler stripping gas and liquid sulfur of at least about 20°C is maintained. In general, the stripping gas may have a temperature of at least about 20°C and preferably less than about 100°C.

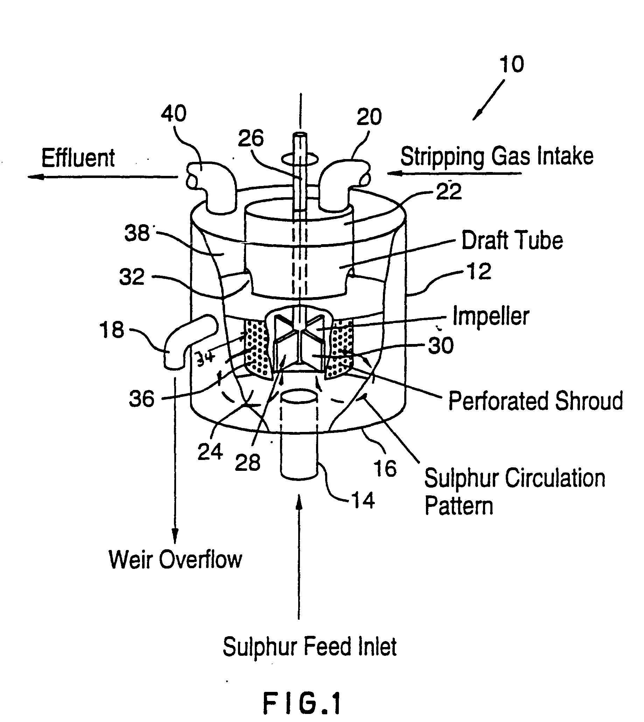

During the course of a series of experiments in two different sulfur processing plants to determine the efficacy of an impeller and shroud combination for the agitation of liquid sulfur and the stripping of hydrogen sulfide, it was observed that the addition of steam in one of the plants to the stripping gas stream which was intimately and vigorously contacted with the sulfur facilitated rapid decreases in the concentration of hydrogen polysulfides. Two different reaction vessels were used in the tests in each of the two sulfur plants, but each reaction vessel was designed in the manner illustrated in Figure 1 and described below. In both series of tests conducted at sulfur plants A and B, when air alone was passed through the contacting system, the free hydrogen sulfide was stripped from the liquid sulfur with a half-life of approximately one minute or less, and the rate of reaction for the removal of the hydrogen polysulfides ranged from a half life of 40 to 60 minutes. However, when steam from plant A was contacted with the liquid sulfur, the rate of reaction for the removal of the hydrogen polysulfides increased to a half-life of less than 6 minutes. Subsequent experiments using different proportions of steam to air resulted in a half-life of about 9 to 15 minutes. In all cases, where steam was employed, the hydrogen sulfide was rapidly stripped from the liquid sulfur, with an estimated half-life of 60 seconds or less.

When this series of experiments was repeated under more readily controlled conditions at sulfur plant B, using a smaller reactor system, it was discovered that the steam did not have the same effect as that used in sulfur plant A. In fact, the effect of steam appeared to be relatively minor, and once again, the half-lives for the decomposition of hydrogen polysulfides were in the order of 30 to 50 minutes, depending on experimental conditions. However, the period represents a considerable improvement over the 3 to 6 hours observed using an inert gas for the stripping.

A careful investigation lead to the finding that certain organic amines were used in the treatment of boiler water at gas plant A, but were not used at gas plant B, leading to the surprising and unexpected discovery that these additives, although present in only trace amounts in the steam, increased the reaction rate to half lives of 1 minute of less, in very great contrast to prior art, and even to our earlier results.

Almost any amine, including ammonia, promotes the rapid conversion of hydrogen polysulfides to hydrogen sulfide, which then are readily and efficaciously removed by the contactor system provided herein. It is observed that such amine materials have been used and are recorded in prior art, but the half lives reported for the degassing process have been significantly longer than those noted herein. This surprising and unexpected discovery that a combination of vigorous agitation and stripping, such as with a contactor operating under the conditions described herein, with the very high mass transfer rates, together with the addition of trace amounts of Bronsted-Lowry bases enables a process to be designed which will degas liquid sulfur much more quickly and with reduced equipment size compared to that of competing systems, because the residence time for the sulfur can be significantly shortened.

It was observed during the series of experiments at sulfur plant B that steam, in effect, played a relatively minor role in the change in the removal of the hydrogen polysulfides over that of air. The addition of a mixture of morpholine and cyclohexylamine resulted in half lives for the decomposition of hydrogen polysulfide in the order of 25 seconds or less. An analysis by FTIR showed the catalyst, water and volatile impurities also are rapidly and nearly completely removed, resulting in a very pure sulfur product.

BRIEF DESCRIPTION OF DRAWINGS

Figure 1 is a schematic perspective view, with parts broken away, of a liquid sulfur degassing device, provided in accordance with one embodiment of the invention;

Figure 2 is a FTIR spectrum of liquid sulfur showing residual concentrations of $H_2S$ and $H_2S_x$ prior to treatment;

Figure 3 shows in graphical manner the decrease in concentration of $H_2S$ and $H_2S_x$ in a pilot plant contactor operating in accordance with one embodiment of the present invention using an air stripping gas in the absence of catalyst;

Figure 4 shows the concentration of hydrogen sulfide with time for the effluent from a pilot scale contactor operating in accordance with one embodiment of the present invention using an air stripping gas in the absence of a catalyst;

Figure 5 illustrates the effect of catalyst on the rate of decrease in concentration of $H_2S_x$ in a bench-scale contactor operating in accordance with one embodiment of the invention using an air stripping gas;

Figure 6 shows FTIR spectrum of liquid sulfur for $H_2S$ and $H_2S_x$ with time post-catalyst injection in the results shown in Figure 5;

Figure 7 contains a comparison of FTIR spectra before and after catalyst addition;

Figure 8 contains a comparison of FTIR spectra for feed and product samples for a steady state flow-through test;

Figure 9 is a graphic representation of the $H_2S_x$ half-life vs catalyst concentration in a pilot-scale contactor with continuous flow-through tests;

Figure 10 contains a comparison of FTIR spectra for an initial feed sample and final degassed sample for a liquid sulfur degassed according to the present invention and having residual $H_2S$ and $H_2S_x$ concentrations below 2 ppmw, and

Figure 11 is a graphical representation of the effect of catalyst concentration on the quantity of $SO_2$ in the off-gas from a pilot plant contactor using an air stripping gas.

GENERAL DESCRIPTION OF INVENTION

The present invention is concerned with a procedure for removing hydrogen sulfide and hydrogen polysulfides from liquid sulfur in a rapid and efficient manner to result in low residual hydrogen sulfide and hydrogen polysulfide levels. The liquid sulfur processed herein may be that produced by a Claus plant converting hydrogen sulfide recovered from oil refining or sour gas to elemental sulfur. However, liquid sulfur containing dissolved hydrogen sulfide and hydrogen polysulfides from any other source may be treated using the procedure of the present invention.

Accordingly, the present invention provides a method of removing hydrogen sulfide and hydrogen polysulfides from liquid sulfur, comprising a plurality of steps. The method of the invention is carried out at a temperature at which sulfur is in a molten state. At temperatures above about 160°C, liquid sulfur becomes more viscous. The preferred temperature range for a system as described herein is about 120°C to about 160°C, more specifically, about 125°C to 155°C. The proportion of hydrogen polysulfides to hydrogen sulfide also increases with increases in temperature, and, therefore, it is preferable to degas liquid sulfur within the temperature ranges noted above.

A rotary impeller comprising a plurality of blades is provided at a submerged location in the liquid sulfur surrounded by a shroud through which are formed a plurality of openings, within a range of impeller to shroud diameter ratios as discussed below.

A stripping gas for hydrogen sulfide is fed to a submerged location in the liquid sulfur within the shroud. The stripping gas may comprise steam and removes from the reaction vessel hydrogen sulfide released from the liquid sulfur in the stripping operation. An amine catalyst preferably is utilized in conjunction with the steam, provided in any convenient manner in the liquid sulfur within the shroud. An oxidizing gas also may be employed in the stripping gas. When such oxidizing gas is used, the oxidizing gas may be oxygen or sulfur dioxide, generally transported in an inert carrier gas, such as carbon dioxide or nitrogen or in steam. An amine catalyst preferably is used in conjunction with the oxidizing gas.

A plurality of simultaneous reactions take place in the liquid sulfur resulting in decomposition of hydrogen polysulfides to hydrogen sulfide and stripping of hydrogen sulfide or conversion of hydrogen sulfide to sulfur. Some of the reactions which may take place, depending on the nature of the stripping gas employed may be designated by the following equations:

$$H_2S + \tfrac{1}{2}O_2 \rightarrow H_2O + S$$

$$H_2S_x + \tfrac{1}{2}O_2 \rightarrow H_2O + S_x$$

$$2H_2S + SO_2 \rightarrow 3S + 2H_2O$$

$$2H_2S_x + SO_2 \rightarrow 2H_2O + S_{2x+1}$$

$$S + O_2 \rightarrow SO_2$$

The stripping gas which is passed through the liquid sulfur should comprise sufficient volume so as to remove the hydrogen sulfide released from the liquid sulfur. It is possible to use Claus process tail gas as the stripping gas since this gas contains nitrogen, water, hydrogen sulfide, sulfur dioxide, carbon dioxide and other constituents. As noted below, the use of a Claus process tail gas stream may result in simultaneous sulfur degassing and Claus plant tail gas clean up.

The catalyst employed herein may be any of the components known to assist the decomposition of hydrogen polysulfides to hydrogen sulfide and sulfur. In general, the catalyst is a Bronsted-Lowry base having a $pK_b$ value of less than about 10, preferably less than about 6. Added catalyst materials in general are Bronsted-Lowry bases soluble in liquid sulfur, so as to promote the decomposition of the hydrogen polysulfides. Such materials preferably are sufficiently volatile to permit their stripping from the degassed liquid sulfur. Specific examples of such added catalyst materials include volatile aliphatic, cyclic and heterocyclic amines sparingly soluble in the liquid sulfur, as well as ammonia. Such catalysts are preferably organic amines, such as cyclohexylamine and morpholine. Only small quantities of added catalyst are needed, generally in the low parts per million range, generally about 10 ppbw to about 10 ppmw relative to the weight of sulfur, preferably about 1 to about 5 ppmw.

The amine catalysts used herein also catalyze conversion of hydrogen sulfide to sulfur in the presence of sulfur dioxide, so that, when a Claus plant effluent or tail gas stream is utilized as the stripping gas for removal of hydrogen sulfide from the liquid sulfur, the presence of the amine enables Claus plant tail gas clean up and liquid sulfur degassing to be effected in a single step with a single catalyst species.

Such degassing operation in the presence of the amine catalyst and sulfur dioxide in the Claus plant tail gas stream may result in almost complete elimination of hydrogen sulfide from the Claus plant tail gas and from liquid sulfur degassing, leaving a gaseous effluent stream free from hydrogen sulfide emissions. In addition to its presence in a Claus plant tail gas stream, the sulfur dioxide employed in this procedure may be provided by burning elemental sulfur or as a slip stream from the Claus plant $H_2S$ burner. It may be preferred to provide a stoichiometric excess of sulfur dioxide to ensure that all hydrogen sulfide, whether in the Claus plant tail gas stream or in the liquid sulfur, is converted to sulfur, to provide a effluent stream which may contain residual sulfur dioxide. Some oxygen may be added to the tail gas stream to effect sulfur dioxide formation in situ in the sulfur and reaction with hydrogen sulfide and/or hydrogen polysulfides to sulfur and water.

The ability to effect complete conversion of hydrogen sulfide to sulfur in the presence of liquid sulfur enables there to be provided, in accordance with another aspect of the invention, a Claus plant tail gas clean up procedure in which the hydrogen sulfide content thereof is converted to sulfur by reaction with sulfur dioxide in liquid sulfur, irrespective of the degassing of the liquid sulfur to remove hydrogen sulfide and hydrogen polysulfides therefrom, using the shroud and impeller combination described herein under the process conditions described.

Accordingly, in another aspect of the present invention, there is provided a method for the processing of a hydrogen sulfide- and sulfur dioxide-containing gas stream to remove at least one of the components therefrom, which comprises providing a rotary impeller comprising a plurality of blades at a submerged location in the liquid sulfur surrounded by a shroud through which are formed a plurality of openings, feeding the gas stream to the submerged location, rotating the impeller about a substantially vertical axis at a speed sufficient to draw liquid sulfur into the interior of the shroud and to distribute the gas stream as bubbles in the liquid sulfur to the interior of the shroud and to form a gas-liquid mixture of bubbles of the gas stream in the liquid sulfur contained within the shroud, and flowing the gas-liquid mixture from within the interior of the shroud through and in contact with the openings to external of the shroud, thereby to effect reaction between hydrogen sulfide and sulfur dioxide to sulfur. The hydrogen sulfide- and sulfur dioxide-containing gas stream preferably is a tail gas stream from a Claus plant.

In general, Claus plants are operated to provide a small stoichiometric excess of hydrogen sulfide over sulfur dioxide, which normally would result in residual hydrogen sulfide after reaction of the sulfur dioxide and hydrogen sulfide. The composition of the gas stream may be adjusted, however, as described herein, to ensure essentially complete reaction of both hydrogen sulfide and sulfur dioxide to sulfur in the liquid sulfur. For example, it may be desirable to add oxygen to the tail gas stream to provide for conversion to hydrogen sulfide and hydrogen polysulfide in the liquid sulfur to sulfur. The Claus plant tail gas clean up procedure generally is carried out in the presence of a catalyst for the reaction of hydrogen sulfide with sulfur dioxide. Any of the Bronsted-Lowry bases mentioned herein may be employed. It may be desirable to provide a non-volatile catalyst in the sulfur.

The impeller generally is rotated about a substantially vertical axis at the submerged location within the liquid sulfur at a blade tip velocity ($v_i$) of at least about 150 in/sec (at least about 4 m/s), preferably at least about 350 in/sec (at least about 9 m/s), more preferably at least about 500 in/sec (preferably at least about 12.5 m/s), for example, up to and greater than about 700 in/sec (up to and greater than about 18 m/s), and draws liquid sulfur into the interior of the shroud effecting vigorous circulation of liquid sulfur through the impeller and shroud combination.

The shear forces between the impeller blades and the plurality of openings in the shroud distribute the stripping gas in the liquid sulfur as bubbles to the interior of the shroud and forms a gas-liquid mixture of bubbles of the stripping gas in liquid sulfur contained within the shroud and effects intimate contact of the stripping gas and liquid sulfur at the submerged location while effecting shearing of the gas-liquid mixture within the shroud and initiating and sustaining rapid mass transfer.

The gas-liquid mixture flows from within the shroud through and in contact with the openings therein to external of the shroud at a gas velocity index (GVI) generally of at least about 4 per second per opening, preferably at least about 18 per second per opening, more preferably at least about 24 per second per opening, which causes further shearing of the gas liquid mixture and further intimate contact of gaseous phase and liquid sulfur. The gas velocity index (GVI) more preferably is at least about 30 per second per opening, and may range to very high values, such as up to about 500 per second per opening, and often is in excess of about 100 per second per opening.

The gas velocity index (GVI) is determined by the expression:

$$GVI = \frac{QP}{4\ nA^2}$$

where Q is the volumetric flow rate of gas into the impeller ($m^3/S$), n is the number of openings in the shroud, A is the area of the opening ($m^2$) and P is the length of the perimeter of the opening (m).

An important operating parameter of the process is the relationship of the shroud diameter relative to the impeller diameter for a given GVI and impeller tip speed and this parameter may be termed the Effective Shear Index (ESI). The ESI is determined by the expression:

$$ESI = \frac{GVI}{v_i}\ X\ \frac{(D_s - D_i)}{2}\ X\ 100$$

wherein GVI is the gas velocity index (/s), $v_i$ is the impeller blade tip velocity (m/s), and $D_s$ and $D_i$ are inside diameter of the shroud and outside diameter of the impeller respectively (m). The method of the invention generally is carried out at an ESI value from about 1 to about 6000, preferably from about 10 to about 250, optimally about 50.

Another important operating parameter of the process of the invention is the relationship of the impeller diameter and height for a given volumetric gas flow rate and impeller tip speed and this parameter may be termed the Shear Effectiveness Index (SEI). The SEI is determined by the relationship:

$$SEI = \frac{Q}{\pi h D_i v_i} \, X \, 100$$

wherein Q is the volumetric gas flow rate into the impeller (m$^3$/s), h is the height of the impeller blades (m), $D_i$ is the outside diameter of the impeller (m) and $v_i$ is the impeller blade tip velocity (m/s). The present invention generally employs an SEI value in the range of about 1 to about 25 and preferably about 2 to about 5. These parameters apply to self-induced systems without internal baffles as described in U.S. Patent No. 3,993,563 (Degner) and/or to those with externally-sparged gas. The ESI and SEI values employed herein preferably are determined for impeller tip speed velocities of at least about 350 in/sec (at least about 9 m/s).

A further important operating parameter of the process is the interrelationship of the density of the liquid phase, namely the liquid sulfur, processed by the present invention and the volumetric flow rate of gas into the reactor and this parameter may be termed the Density Index (DI). The DI is determined by the expression:

$$DI = \frac{Q}{Q_i} \left[ \frac{\rho_L - \rho_g}{\rho_{H2O} - \rho_{air}} \right]$$

where Q is the volumetric flow rate of the stripping gas to the impeller (m$^3$/s), $Q_i$ is the self-induction flow rate of air into water (m$^3$/s), $\rho_L$ is the density of the liquid sulfur (kg/m$^3$), $\rho_g$ is the density of the gas (kg/m$^3$), $\rho_{H2O}$ is the density of water (kg/m$^3$) and $\rho_{air}$ is the density of air (kg/m$^3$). The method of the invention generally is carried out at a DI value from about 1 to about 8, preferably about 3.

For efficient operation, the procedure is preferably effected at a Gas Displacement Index (GDI) value of about -0.50 to about 0.95 as determined by the relationship:

$$GDI = \frac{2V_i.\omega - Q}{2V_i.\omega}$$

where $V_i$ is the volume swept by the impeller (m$^3$), $\omega$ is the rate of rotation of the impeller (rad/s) and Q is the volumetric flow rate of the gas to the impeller (m$^3$/s), and a Mixing Index (MI) value of at least about -5 as determined by the relationship:

$$MI = \frac{2V_i.\omega - Q}{Vr}$$

where $V_i$ is the volume swept by the impeller (m$^3$), $\omega$ is the rate of rotation of the impeller (rad/s), Q is the volumetric flow rate of gas to the impeller (m$^3$/s) and $V_r$ is the volume of the reactor (m$^3$).

DESCRIPTION OF PREFERRED EMBODIMENT

Referring to the drawings, Figure 1 shows a novel liquid sulfur degassing device 10 operated in accordance with one preferred embodiment of the invention. The device 10 includes an enclosed housing 12 illustrated to be of cylindrical shape but any convenient geometric shape may be adopted. It is preferred that the geometric shape of the housing may be such as to avoid dead zones in the liquid phase contained within the housing.

A liquid sulfur feed inlet pipe 14 communicates with the interior of the housing 12 through the lower wall 16 and an overflow outlet 18 for liquid sulfur allows liquid sulfur to overflow from the interior of the housing 18 following processing therein.

A gas inlet 20 communicates with a standpipe 22 or draft tube extending downwardly inside the housing 12 to below the level of the body of liquid sulfur 24 contained within the vessel to enable a stripping gas for hydrogen sulfide. The stripping gas generally is air but a sulfur dioxide-containing gas stream may be employed. Steam may be employed in place of or in addition to air. The tail gas stream from a Claus plant also may be employed as the gas feed, thereby also effecting Claus plant tail gas clean up. As mentioned earlier, Claus plant tail gas clean up also may be effected in liquid sulfur from which the stripping of hydrogen sulfide and/or polysulfide is not required, such as liquid sulfur which has been degassed according to the invention.

The gas stream generally is of a volume to permit purging of hydrogen sulfide released by the liquid sulfur following decomposition of hydrogen polysulfide from the vessel 10. Suitable Bronsted-Lowry catalysts included those having $pK_b$ values of less than about 10 and preferably less than about 6, and may comprise amines sparingly soluble in the liquid sulfur. The catalyst may be introduced to the interior of the shroud 34 by any convenient means, such as transportation in the stripping gas stream or by direct introduction to the vortex in the shroud. If desired, a catalyst which is soluble in the liquid sulfur may be contained therein.

Generally, the flow rate of the stripping gas stream may range upwardly from a minimum of about 50 cu.ft/min. (about 25 $dm^3$/s), for example, in excess of about 3000 cu.ft/min. (about 1400 $dm^3$/s), although much higher or lower flow rates may be employed. The pressure drop across the unit may be quite low and may vary from about -3 to about +40 in. $H_2O$ (from about -75 to about +1000 mm $H_2O$), preferably from about 0 to less than about 10 in. $H_2O$ (250 mm $H_2O$). For larger units, employing a fan or a blower to assist the gas flow rate to the impeller, the pressure drop may be greater. The flow rate is further defined by the DI values discussed above.

A drive shaft 26 extends into the vessel 10 and has an impeller 28 mounted at its lower end just below the lower extremity of the standpipe 22. A drive motor (not shown) is operatively connected to the drive shaft 26 to effect rotation of the shaft 26 and hence the impeller 28.

The impeller 28 comprises a plurality of radially-extending blades 30. The number of such blades may vary and generally at least four blades 30 are employed, as illustrated, with the blades being equi-angularly spaced apart. The impeller 28 is illustrated with the blades 30 extending vertically. However, other orientations of the blades 30 are possible.

Generally, the standpipe 22 has a diameter dimension related to that of the impeller 28 and the ratio of the diameter of the standpipe 22 to that of the impeller 28 generally may vary from about 1:1 to about 2:1. However, the ratio may be lower, if the impeller is mounted below the standpipe. The impeller 28 generally has a height which corresponds to an approximately 1:1 ratio with its diameter, but the ratio generally may vary from about 0.3:1 to about 3:1. As the stripping gas is drawn down through the standpipe 22 by the action of the rotating impeller 28 and the liquid sulfur is drawn into the impeller 28 thereby, the action of stripping gas and liquid sulfur flow and rotary motion produce a vortex of liquid sulfur in the standpipe and the region of the impeller 28. Alternatively, the stripping gas may be introduced below the impeller 28 and drawn into the interior of the shroud 34 by the action of the impeller 28.

The ratio of the cross-sectional area of the shrouded impeller 28 to the cross-sectional area of the apparatus 10 may vary widely.

Another function of the impeller 28 is to distribute the introduced stripping gas bubbles within the liquid sulfur in the interior of the shroud 34. This result is achieved by rotation of the impeller 28, resulting in shear of liquid sulfur and stripping gas to form bubbles of relatively wide size distribution dimensioned so that the largest are no more than about ¾ inch (20 mm) in diameter.

A critical parameter in determining an adequate shearing to form the gas bubbles is the velocity of the outer tip of the blades 30. A blade tip velocity ($v_i$) of at least about 150 in/sec (at least about 4 m/s) is required to achieve efficient (i.e., 99%+) and rapid (of the order of minutes residence time) removal of hydrogen sulfide from liquid sulfur and conversion of hydrogen polysulfide, preferably at least about 350 in/sec (at least about 9 m/s), more preferably at least about 500 (at least 12.5), and up to and greater than 700 in/sec (about 18 m/s).

The impeller 28 is surrounded by a cylindrical stationary shroud 34 having a uniform array of circular openings 36 through the wall thereof. The shroud 34 generally has a diameter slightly greater than the standpipe 22. Although, in the illustrated embodiment, the shroud 34 is right cylindrical and stationary, it is possible for the shroud 34 to possess other shapes. For example, the shroud 34 may be tapered, with the impeller 28 optionally also being tapered. In addition, the shroud 34 may be rotated, if desired, usually in the opposite direction to the impeller 28. Further, the shroud 34 is shown as a separate element from the standpipe 22. However, the shroud 34 may be provided as an extension of the standpipe 22, if desired.

Further, the openings 36 in the shroud are illustrated as being circular, since this structure is convenient. However, it is possible for the openings to have different geometrical shapes, such as square, rectangular or hexagonal. Further, all the openings 36 need not be of the same shape or size.

The shroud 34 serves a multiple function in the device. Thus, the shroud 34 prevents gases from by-passing the impeller 28, assists in the formation of the vortex in the liquid sulfur necessary for gas induction, assists in achieving shearing as well as providing additional shearing and confines the gas-liquid mixture and hence maintains the turbulence and agitation produced by the impeller 28. The effect of the impeller-shroud combination may be enhanced by the employment of a series of elongate baffles, provided on the internal wall of the shroud 34, preferably vertically extending from the lower end to the upper end of the openings in the shroud. The gas-liquid mixture flows through and in contact with the openings 36 in the shroud which results in further shearing of the gas bubbles and further intimate contact of the gaseous and liquid phases.

The combined action of the impeller and shroud results in a rapid mass transfer of hydrogen sulfide into the stripping gas and catalyst into the sulfur, resulting in very rapid removal of dissolved hydrogen sulfide and decomposition of hydrogen polysulfides to sulfur and hydrogen sulfide. The reactions are very rapid, in contrast to the prior art liquid sulfur degassing operations. The combined action of the impeller and shroud effects circulation of liquid sulfur within the housing 12 and adequate mixing of the liquid sulfur in the body of liquid sulfur external to the shroud 32 to ensure the release of the stripping gas.

The openings 36 are dimensioned to permit a gas flow rate therethrough corresponding to a gas velocity index of at least about 4 per second per opening in the shroud, preferably at least about 18 per second per opening and more preferably at least about 30 per second per opening.

The shroud 34 is spaced only a short distance from the extremity of the impeller blades 30, in order to provide and promote the above-noted functions. Generally, the ratio of the diameter of the shroud 34 to that of the impeller 28 generally is about 3:1 to about 1.1:1, preferably approximately 1.5:1. The relationship of the shroud and impeller diameters may be further particularized by the ESI and SEI indices discussed above.

The openings 36 in the shroud 34 generally are circular, although an equivalent effect can be achieved using openings of large aspect ratio, such as slits. When such circular openings are employed, the openings 36 generally are uniformly distributed over the wall of the shroud 34 and usually are of equal size. The equivalent diameter of the openings 36 often is less than about one inch (25 mm) and generally should be as small as possible without plugging, preferably about ⅜ to about ⅝ inch (about 10 to about 15 mm) in diameter, in order to provide for the required gas flow therethrough. When the openings 36 are of non-circular geometrical shape and of aspect ratio which is approximately unity, then the area of each such opening 36 generally is less than the area of a circular opening having an equivalent diameter of about one inch (25 mm), preferably about ⅜ to about ⅝ inch (about 10 to about 15 mm). The openings have sharp corners to promote shearing of the gas bubbles passing through the openings and contacting the edges.

The shroud 34 is illustrated as extending downwardly for the height of the impeller 28. It is possible for the shroud 34 to extend above the height of the impeller 28 or for less than its full height, if desired.

In addition, in the illustrated embodiment, the impeller 28 is located a distance corresponding to approximately half the diameter of the impeller 28 from the bottom wall of the reactor 10. It is possible for this dimension to vary from less than about 0.25:1 to about 1:1 or greater of the proportion of the diameter dimension of the impeller. This spacing of the impeller 28 from the lower wall allows liquid sulfur to be drawn into the area between the impeller 28 and the shroud 34 from the body of liquid sulfur 24 in the reactor 10. If desired, a draft tube may be provided extending into the body of the liquid sulfur from the lower end of the impeller 28, to guide liquid into the region of the impeller.

Following passage of the gas-liquid mixture through the openings in the shroud a relatively quiescent zone is provided in the body of liquid sulfur 24 where gas bubbles disengage from the sulfur and provide a gaseous phase in the head space above the liquid level of molten sulfur in the vessel 10. A further shroud may be provided surrounding the shroud 34 to promote additional mixing.

The liquid sulfur degassing apparatus 10 provides a very compact unit which rapidly and efficiently removes hydrogen sulfide and hydrogen polysulfides from liquid sulfur, in contrast to the large size holding tanks commonly employed in the art.

The novel sulfur degassing procedure employed herein may be effected as a single operation, or more preferably, a plurality of individual contactors connected in series, with each contactor having a hold-up volume commensurate with the production rate of liquid sulfur, thereby providing continuous processing of the liquid sulfur. The individual contactors may vary in hold-up capacity and residence time, depending on the degassing requirements of the sulfur producing plant. A typical operation effected in accordance with the invention produces a high quality product with a total hydrogen sulfide content of a few ppmw or less, or such higher value as can be accepted. A polishing contactor, designed to remove catalyst from the liquid sulfur can further contribute to improve product quality. The gas phases may be circulated countercurrently through the contactors.

Any sulfur dioxide which may be formed as a result of oxidation with air in later stages of processing with low residual hydrogen sulfide levels may be reacted with hydrogen sulfide in earlier stages, converting some of the hydrogen sulfide present to elemental sulfur.

The processing of the liquid sulfur in the apparatus 10 produces a low volume effluent gas which is relatively high in hydrogen sulfide content, along with some volatile impurities and traces of sulfur vapor, which is vented from the head space 38 above the body of liquid sulfur 24 in the vessel 10 through a gaseous outlet 40. This effluent stream may be disposed of by incineration, or may be used as feed stream to a Claus plant for the oxidation of hydrogen sulfide, or to another hydrogen sulfide control process, such as by utilizing the procedure of US-A-5,174,973, referred to previously.

EXAMPLES

Example 1:

An experimental apparatus was set up having the structure illustrated in Figure 1. Two contactors differing in size were tested. A bench scale unit having a volume of 9 litres (16 kg) was used primarily to measure the removal rates of $H_2S$ and $H_2S_x$ by measuring concentrations over time. A 970 litre pilot scale unit (1.75 tonnes) was used primarily to measure reaction rates using a steady-state flow of liquid sulfur. Sulfur produced by the Claus process from two different gas plants was used as feedstock for the two units.

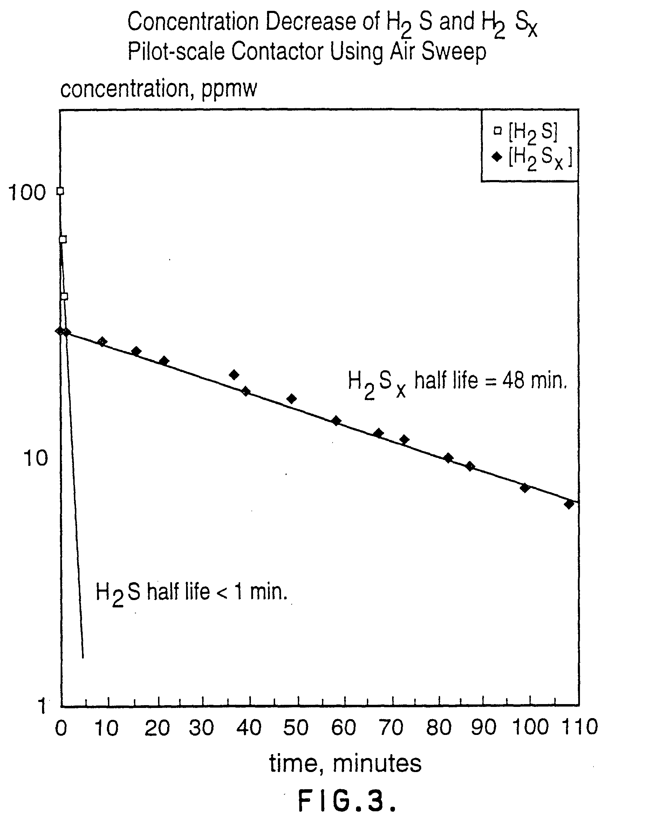

The operating parameters for the apparatus employed in generating the data shown in Figure 3 to 8 and 10 are set forth in the following Table:

| Figures | 3, 4 | 5, 6 | 7 | 8, 10 |
|---------|------|------|---|-------|
| $V_i$ in/s (m/s) | 640 (16.3) | 356 ($9.0^2$) | 640 (16.3) | 640 (16.3) |
| GVI /s | 28.9 | 9.7 | 53.1 | 43.4 |
| ESI | 23.7 | 3.1 | 43.6 | 35.6 |
| SEI | 1.6 | 0.9 | 2.9 | 2.3 |
| DI | 1.9 | 1.0 | 3.5 | 2.9 |

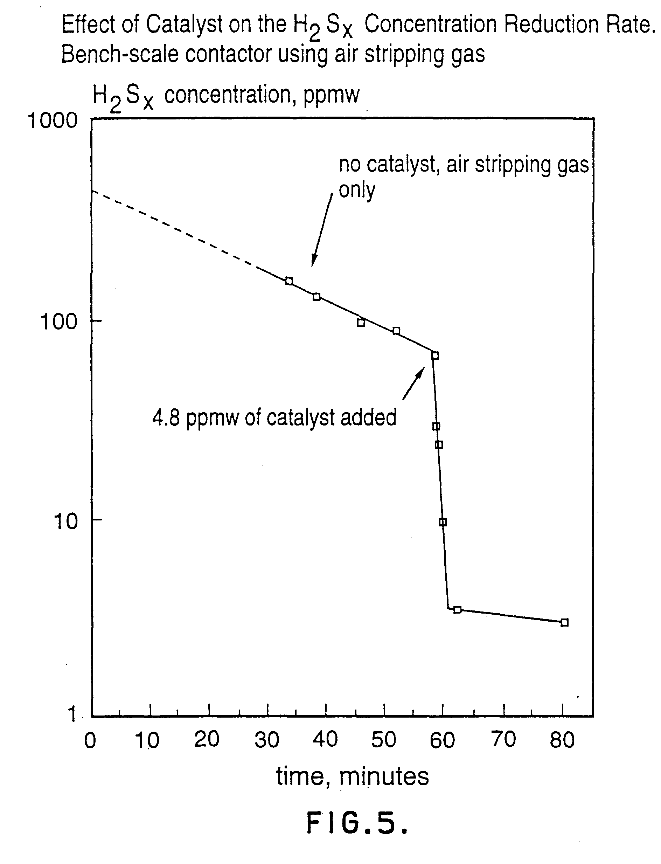

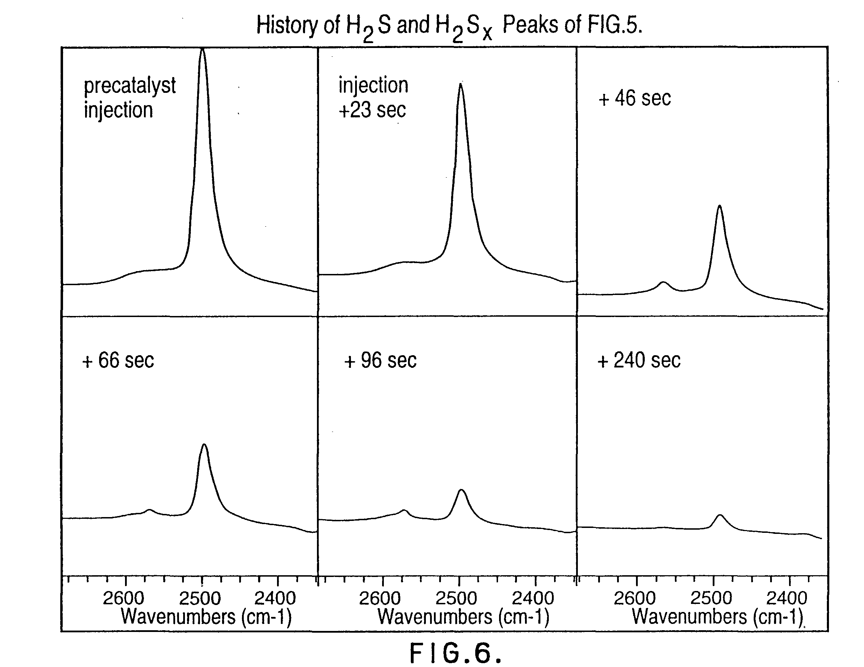

The apparatus used to generate the data in Figure 5, 6 had an impeller 2 in. (5.1 cm) in diameter and 2 in. (5.1 cm) in height and a shroud having an inside diameter of 4.25 in. (10.8 cm), with 100 x ⅜ in. (0.95 cm) diameter openings therethrough. The apparatus used to generate the data in the other Figures had an impeller 12.75 in. (32.4 cm) in diameter and 13 in. (33.0 cm) in height and a shroud having an inside diameter of 23.25 in. (59.1 cm), with 1824 x ½ in. (1.27 cm) diameter openings therethrough.

Samples of liquid sulfur were withdrawn at various locations and times and the concentration of the $H_2S$ and $H_2S_x$ measured using a Fourier Transform Infra Red (FTIR) spectrophotometer within a few minutes after sampling. An accessory system developed by Alberta Sulphur Research had permitted non-intrusive determination of the total residual $H_2S$ ($H_2S+H_2S_x$) concentrations in liquid sulfur down to 4 ppmw. The absorptions by $H_2S$ at 2570 cm$^{-1}$ and $H_2S_x$ at 2497 cm$^{-1}$ were calibrated and displayed in units of ppmw.

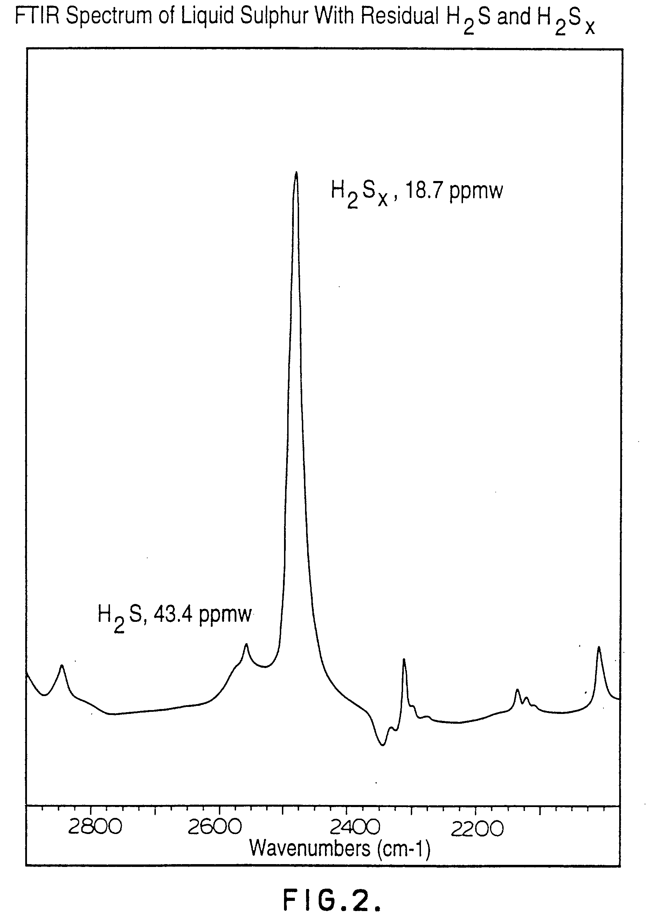

The contactors were operated using air as the stripping gas with and without added catalyst OPTI-MEEN 2200 (Betz Chemicals, Ltd, a proprietary aqueous solution of morpholine (10 to 30%) and cyclohexylamine (40 to 70%). A typical FTIR spectrum showing $H_2S$ and $H_2S_x$ in liquid sulfur feed is shown in Figure 2. The curves shown in Figure 3 present the $H_2S$ and $H_2S_x$ concentration plotted logarithmically against time for a typical experiment conducted with the pilot reactor using air as the stripping gas in the absence of catalyst. The steeply falling line at the left edge of the graph depicts the decrease in concentration of dissolved hydrogen sulfide, while the gradually sloped curve depicts the decrease in the concentration of polysulfides. Based on the slopes of these lines, the half-lives for $H_2S$ and $H_2S_x$ were calculated to be 0.75 and 48 minutes respectively.

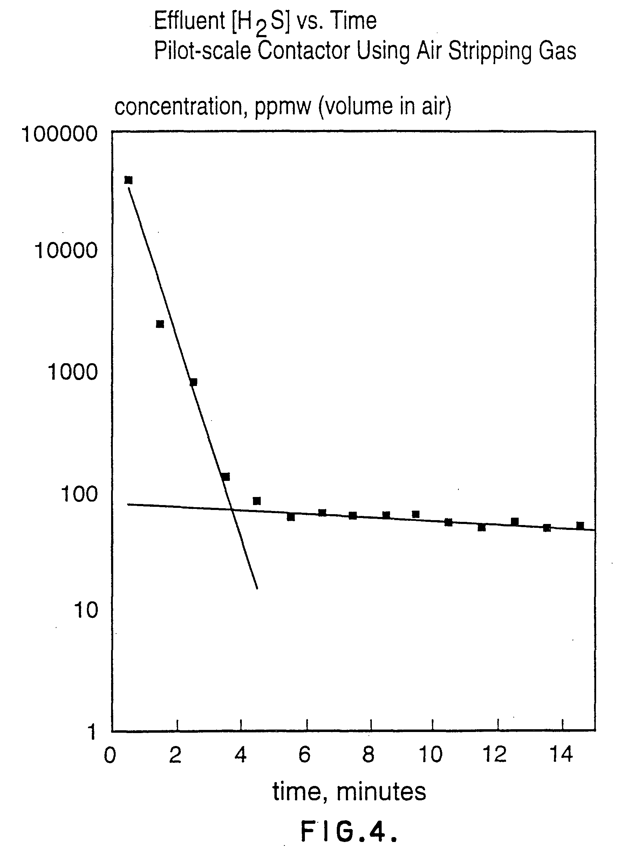

Figure 4 contains a semi-logarithmic plot of the gaseous hydrogen sulfide concentration in the effluent gas against time. The very fast initial decrease in $H_2S$ concentration can be attributed to the rapid degassing of hydrogen sulfide while the slow decrease in $H_2S$ concentration corresponds to decomposition of $H_2S_x$.

Figure 5 shows the effect of the addition of a small amount of catalyst in a batch test, namely 4.8 ppmw of OPTI-MEEN 2200. As can be seen, the addition of the catalyst had a remarkable effect on the rate at which hydrogen polysulfides were converted to $H_2S$. Sulfur containing high initial concentrations of $H_2S$ and $H_2S_x$ was degassed using air as the stripping gas in the bench scale apparatus. Measurement of the hydrogen polysulfide concentration commenced about 30 minutes into the run, once the concentration fell within the calibrated range (<195 ppmw) and at various times over the next 25 minutes to establish a reference half-life using air as the stripping gas. Fifty-eight minutes into the run, 0.08 mL of catalyst, corresponding to a nominal concentration of 4.8 ppmw, was injected into the stripping gas intake line using a syringe. As can be seen from Figure 5, the half-life for the decrease in $H_2S_x$ concentration with catalyst present was reduced to less than one minute from about 45 ± 15 minutes generally observed with air alone, corresponding to about a 40-fold increase in decomposition rate.

Figure 6 contains FTIR spectra showing the history of $H_2S$ and $H_2S_x$ peaks at around the time of catalyst addition in Figure 5. A small $H_2S$ peak, absent before the introduction of catalyst, appeared simultaneously with the onset of the rapid depletion of $H_2S_x$. Concomitant with the progressive decrease in the $H_2S_x$ peak, the $H_2S$ rose to a maximum a short time later and then declined in parallel with the $H_2S_x$ peak.

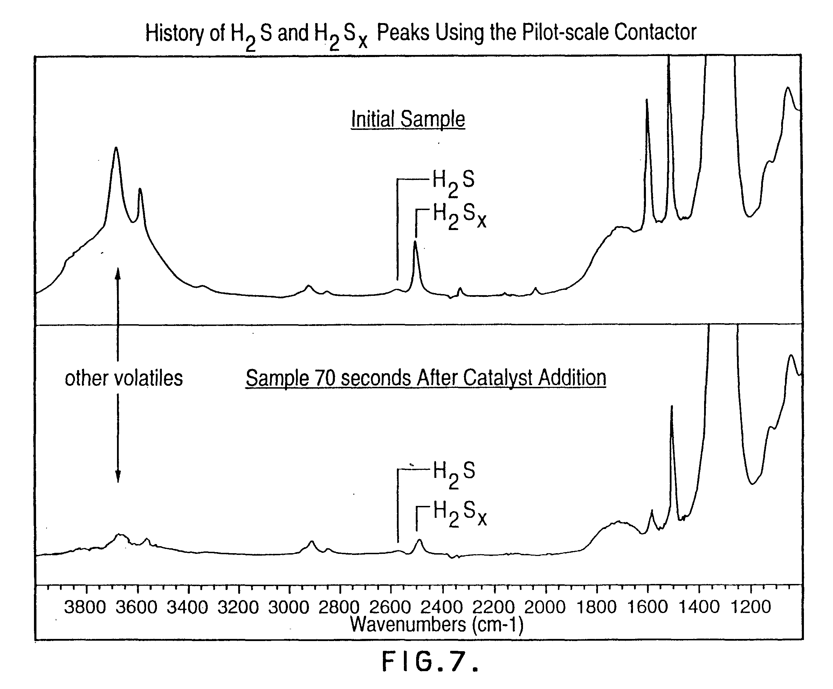

Batch tests using catalyst in the larger pilot-scale contactor yielded results comparable with those obtained with the bench-scale apparatus. Figure 7 shows the spectra of sulfur samples taken from the contactor prior to and 70 seconds after injecting an amount of catalyst; nominally equivalent to 1.2 ppmw, into the air intake of the large contactor. In the test of Figure 7, polysulfides concentration decreased with a half-life of around 0.5 minutes, again indicative of the powerful influence a very small amount of catalyst has on the polysulfide decomposition rate in the process of the invention. As with the bench-scale unit, $H_2S$ remained observable while $H_2S_x$ was decomposing at a rapid rate. Moreover, the agreement between declining concentration rates observed with the two contactors widely different in size confirmed the validity of the scale-up factors used in the design of the larger unit.

A visual comparison of the two spectra in Figure 7 reveals that many of the peaks, like the $H_2S$ peak, rapidly decrease in height over a short time. The majority of the peaks declined exponentially with half-lives between 0.3 and 0.8 minutes, quite within the range seen for $H_2S$. This is the case for water, which absorbs in the region over 4000 $cm^{-1}$ to 3400 $cm^{-1}$ and at 1591 $cm^{-1}$. It may be reasonably generalized that any volatile substance, such as water $CO_2$, $SO_2$, COS, $CS_2$ and hydrocarbons also may be effectively purged, along with the catalyst itself.

Example 2:

Although batch studies of the time dependency of the $H_2S$ and $H_2S_x$ concentrations provided a clear picture of the capabilities of the process as outlined in Example 1, the performance of the pilot-scale contactor using a steady-state flow of feed sulfur gave a much better idea of the process in its practical application. Sulfur flowrates were varied between 34 and 53 tonnes/h. Catalyst was introduced directly into the liquid sulfur in quantities ranging from 4.8 to 10.8 ppmw. No significant effect on the rates of decrease in concentration of $H_2S$ and $H_2S_x$ was observed on varying the sulfur temperature from 140° to 152°C.

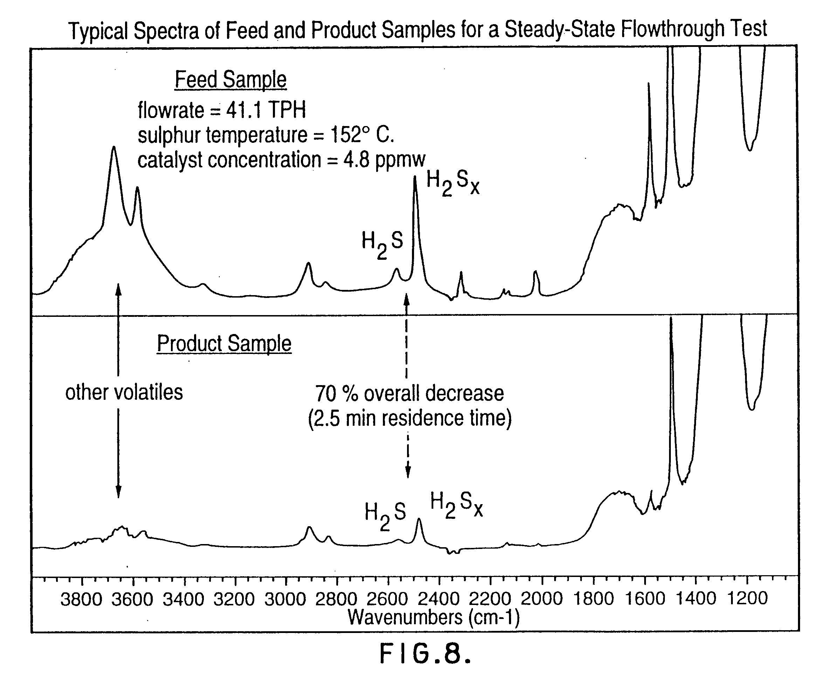

The spectrum of contactor feed and contents for a typical flowthrough test are presenting in Figure 8. The marked decrease in the absorption by $H_2S$, $H_2S_x$ and other volatiles qualitatively suggests that efficient degassing of the various substances is taking place.

Measurement of the respective concentrations indicate that 61% of the $H_2S$ and 79% of the $H_2S_x$ was removed during the hold-up time of 2.5 minutes, corresponding to half-lives of 0.76 and 0.46 minutes, respectively. It is noted in Figure 8 that other volatile substances in the feed are as readily degassed in flowthrough tests as in batch tests (see Figure 7), with rates comparable to the degassing of $H_2S$.

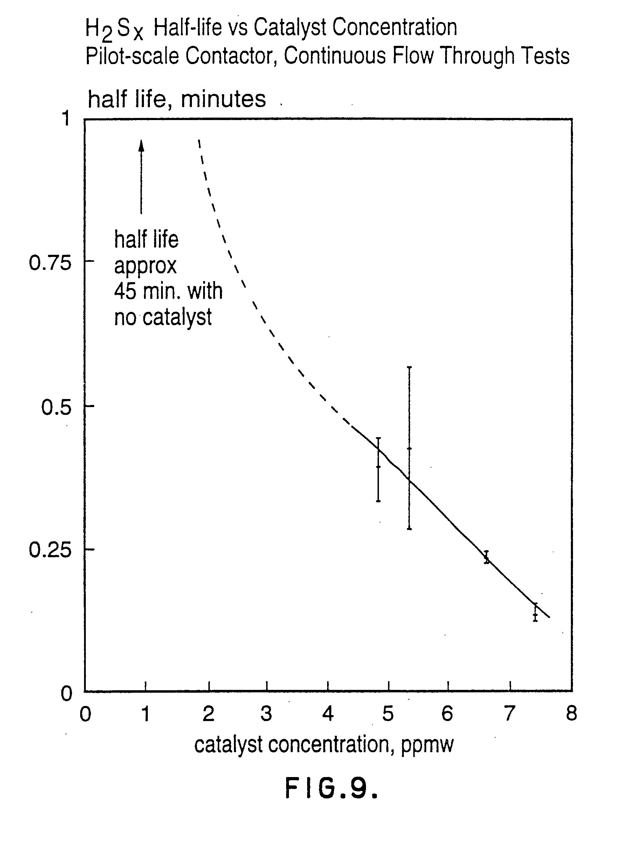

Figure 9 summarizes the results of the continuous flow experiments, showing the half-life of the $H_2S_x$ decomposition reaction as a function of catalyst concentration, expressed in ppmw with respect to the sulfur. The vertical lines represent the range of values for several sets of measurements taken at a particular catalyst concentration. In many instances where the catalyst concentration was above 8 ppmw, the $H_2S_x$ concentrations in the contactor were reduced to levels below the measurement sensitivity (< 2 ppmw) of the FTIR system. Since the final concentration was not known in these cases, quantitative rate data were not acquired, although it is noted that the half-life was below 0.5 minutes. This Figure suggests that the half life of polysulfide concentration decrease varies approximately linearly with catalyst concentration in the region between 4 and 8 ppmw. The curve, however, rises very steeply as the catalyst concentration approaches zero, since the half-life measured in batch tests with no catalyst present was approximately $45 \pm 15$ minutes.

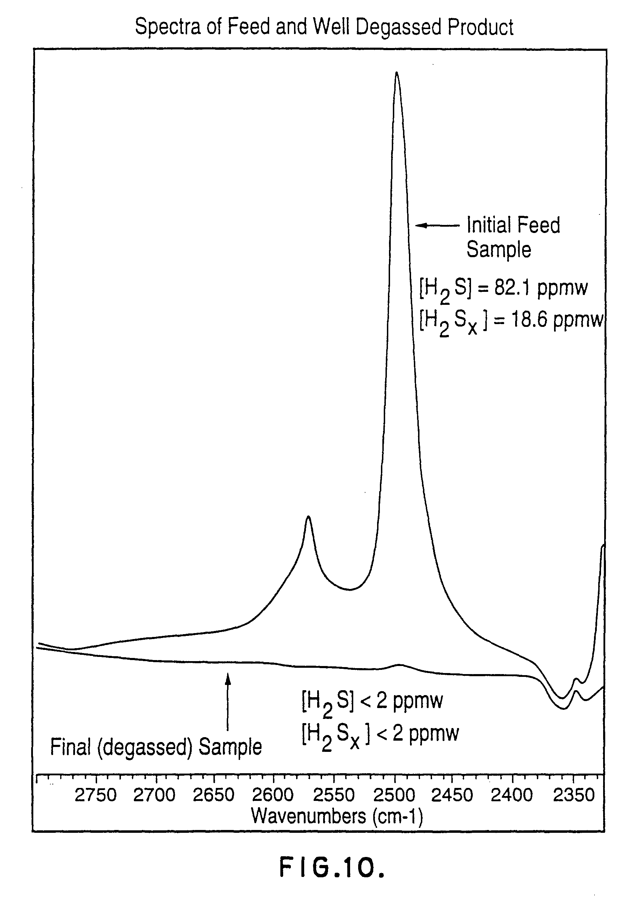

Degassification of sulfur down to very low levels of $H_2S$ and $H_2S_x$ was routinely achieved with the pilot scale contactor. Figure 10 compares the spectrum of a sulfur sample taken at the start of one of the tests to one taken after approximately three passes through the pilot-scale contactor. Very low residual $H_2S$ and $H_2S_x$ concentrations were achieved, (since the $H_2S$ peak is hardly detectable, and the $H_2S_x$ concentration is well below the measurement accuracy) using a flowthrough contactor of a size that would comfortably handle the production of many existing sulfur plants.

Example 3:

During the experiments reported in Examples 1 and 2, it became apparent that the strength properties of (solidified) sulfur samples taken from the contactor varied significantly. Those samples that contained a modest amount of residual catalyst were brittle and crumbly whereas those samples that contained less of the catalyst were very hard to break.

This effect was substantiated in an experiment where the $H_2S$ and $H_2S_x$ concentrations in 75 tonnes of sulfur were reduced below 2 ppmw by degassing using a catalyst concentration of approximately 10 ppmw. After the $H_2S$ and $H_2S_x$ were essentially eliminated, half of the liquid sulfur was solidified using a granulation process, and samples of the product set aside for friability testing according to SUDIC procedures (ref. 2). With liquid sulfur feed containing residual amounts of catalyst but very little $H_2S$ and $H_2S_x$, the friability averaged 3.1%. The remaining sulfur was then circulated once more through the contactor to degas as much of the volatile catalyst as possible by contacting the sulfur with air only.

After this simple treatment, the sulfur was solidified as before. The friability of the granulated product, in this case produced from liquid sulfur with a reduced amount of catalyst, averaged 0.7%.

Based on these comparative results, it appears that the presence of the catalyst and possibly other impurities, even in concentrations of a few ppmw, can have a significant effect on product quality. However, the degassing process provided herein has the capability to overcome any detrimental effects linked to catalyst contamination by dedicating a polishing contactor to the. task of degassing the residual catalyst from the sulfur.

Example 4:

During the course of sulfur degassification tests with the pilot-scale unit described in Example 1 using air as the stripping gas and continuous sulfur flows, a determination was made of $SO_2$ content of the off-gas stream as a function of catalyst concentration. During these experiments, the following operating parameters were employed:

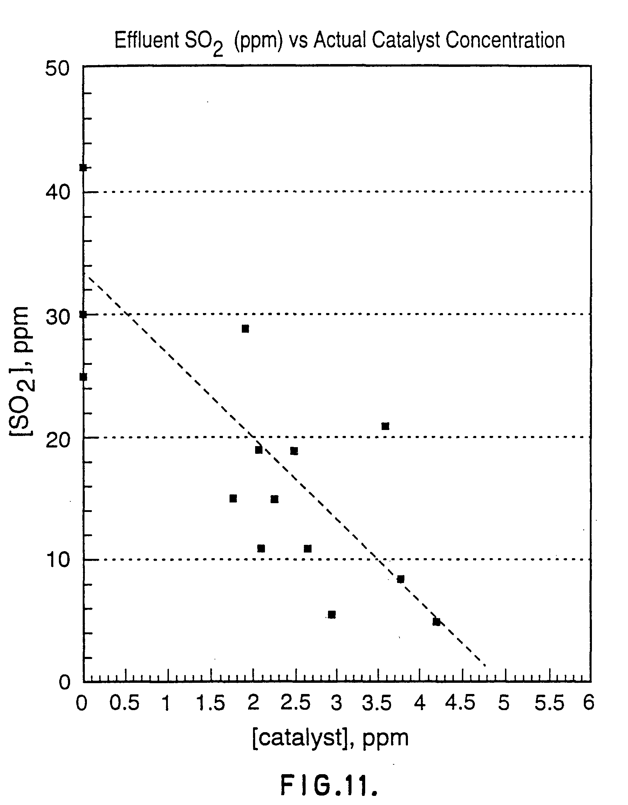

$V_i$ = 350 in/s(8.9 m/s), GVI = 34.8/s, ESI = 11.2, SEI = 3.3 and DI = 5. The data obtained was plotted graphically and appears as Figure 11.

As is seen therein, in the absence of catalyst (OPTI-MEEN 2200) 25 to 42 ppmw or approximately 0.01 mol/min of sulfur dioxide is produced by the reaction:

$$S + O_2 \rightarrow SO_2$$

This production rate decreased to 0 mol/min when the catalyst concentration was in the range of 4.4 to 5.0 ppmw. A likely explanation for this observation is an increased rate of a catalysed Claus reaction in the liquid sulfur:

$$H_2S \text{ and/or } H_2S_x + SO_2 \rightarrow S + H_2O$$

In another series of experiments, on this occasion using the bench-scale unit described in Example 1, with nitrogen containing a small amount of sulfur dioxide as the stripping gas and a batch sulfur with no catalyst, the effluent concentrations of sulfur dioxide and hydrogen sulfide were determined. The parameters of operation are those for the bench-scale unit enumerated in Example 1 for Figures 5 and 6. The effluent concentrations were as set forth in the following Table:

| Time (min) | $[SO_2]$ ppmv | $[H_2S]$ ppmv |
|---|---|---|
| 0 | 120 | 0 |
| 4 | >120 | 0 |
| 13 | 1000 | 0 |
| 26 | 200 | 0 |

The data presented in this Table provides additional evidence of the existence of a Claus reaction in the liquid sulfur.

The present invention provides a novel method of degassing liquid sulfur to remove hydrogen sulfide and hydrogen polysulfides therefrom by a stripping gas in the presence of a catalyst. The hydrogen sulfide is rapidly and efficiently stripped and the hydrogen polysulfides are decomposed to sulfur and hydrogen sulfide, using an impeller-shroud combination, generally in conjunction with specific operating parameters. The present invention further provides a novel method of effecting the Claus reaction, particularly for Claus plant tail gas clean up, by employing the impeller-shroud combination and liquid sulfur as the medium in which sulfur dioxide and hydrogen sulfide react to form sulfur. Claus plant tail gas also may be used as the stripping gas for liquid sulfur containing hydrogen sulfide and hydrogen polysulfides. Modifications are possible within the scope of the claims.

REFERENCES

1. NIOSH, "Criteria for a Recommended Standard, Occupational Exposure to Hydrogen Sulfide", National Institute for Occupational Safety and Health, Cincinnati OH, 1977.

2. Sampling and Testing of Sulphur Forms, Sulphur Development Institute of Canada, 1978.

**Claims**

1. A method of removing hydrogen sulfide and hydrogen polysulfides from liquid sulfur, **characterized by**:

   providing a rotary impeller comprising a plurality of blades at a submerged location in said liquid sulfur surrounded by a shroud through which are formed a plurality of openings,
   feeding a stripping gas for hydrogen sulfide to said submerged location while providing a Bronsted-Lowry base catalyst for the conversion of hydrogen polysulfides to hydrogen sulfide thereat,
   rotating said impeller about a substantially vertical axis at a speed sufficient to draw liquid sulfur into the interior of the shroud and to distribute said stripping gas as bubbles in said liquid sulfur to the interior of said shroud and to form a gas-liquid mixture of bubbles of said gas in said liquid sulfur contained within said shroud,
   flowing said gas-liquid mixture from within the interior of said shroud exclusively through said openings to external of said shroud, and
   removing said stripping gas from the liquid sulfur.

2. A method for the processing of a hydrogen sulfide- and sulfur dioxide-containing gas stream to remove at least one of the components therefrom, **characterized by**:

   providing a rotary impeller comprising a plurality of blades at a submerged location in liquid sulfur surrounded by a shroud through which are formed a plurality of openings,
   feeding said gas stream to said submerged location,
   rotating said impeller about a substantially vertical axis at a speed sufficient to draw liquid sulfur into the interior of the shroud and to distribute said gas stream as bubbles in said liquid sulfur to the interior of said shroud and to form a gas-liquid mixture of bubbles of said gas stream in said liquid sulfur contained, within said shroud, and
   flowing said gas-liquid mixture from within the interior of said shroud exclusively through said openings to external of said shroud, thereby to effect reaction between hydrogen sulfide and sulfur dioxide to sulfur.

3. A method of removing hydrogen sulfide and hydrogen polysulfides from liquid sulfur, **characterized by**:

   providing a rotary impeller comprising a plurality of blades at a submerged location in said liquid sulfur surrounded by a shroud through which are formed a plurality of openings,
   feeding a stripping gas for hydrogen sulfide to said submerged location,
   rotating said impeller about a substantially vertical axis at a speed corresponding to a blade tip velocity ($v_i$) of at least 150 in/sec (at least 4 m/s) so as to draw liquid sulfur into the interior of the shroud and to generate sufficient shear forces between said impeller and said plurality of openings in said shroud to distribute said stripping gas as bubbles in said liquid sulfur to the interior of said shroud and to effect intimate contact of said gas and said liquid sulfur at said submerged location so as to form a gas-liquid mixture of bubbles of said gas in said liquid sulfur contained within said shroud while effecting shearing of said gas-liquid mixture within said shroud, and
   flowing said gas-liquid mixture from within the interior of said shroud exclusively through said openings to external of said shroud at a gas velocity index (GVI) of at least 4 per second per opening in said shroud so as to effect further shearing of the gas-liquid mixture and further intimate contact of said gas and said liquid sulfur, said gas velocity index (GVI) being determined by the expression:

   $$GVI = \frac{QP}{4nA^2}$$

   where Q is the volumetric flow rate of gas into the impeller ($m^3/s$), n is the number of openings in the shroud, A is the area of the opening ($m^2$) and P is the length of the perimeter of the opening (m),
   said method being carried out:

   (a) at an Effective Shear Index (ESI) value of 1 to 6000 as determined by the relationship:

   $$ESI = \frac{GVI}{v_i} \ X \ \frac{(D_s\text{-}D_i)}{2} \ X \ 100$$

where $D_s$ is inside diameter (m) of the shroud and $D_i$ is the outside diameter (m) of the impeller,
(b) at a Shear Effective Index (SEI) value of 1 to 25 as determined by the relationship:

$$SEI = \frac{Q}{\pi h D_i v_i} \ X \ 100$$

where h is the height of the impeller (m), and
(c) at a Density Index (DI) value of 1 to 8 as determined by the relationship:

$$DI = \frac{Q}{Q_i}\left[\frac{\rho_L - \rho_g}{\rho_{H2O} - \rho_{air}}\right]$$

where $Q_i$ is the self-induction flow rate of air into water (m³/s), $\rho_L$ is the density of the liquid sulfur (kg/m³), $\rho_g$ is the density of the gas (kg/m³), $\rho_{H2O}$ is the density of water (kg/m³) and $\rho_{air}$ is the density of air (kg/m³).

4. A method for the processing of a hydrogen sulfide- and sulfur dioxide-containing gas stream, **characterized by**:

providing a rotary impeller comprising a plurality of blades at a submerged location in liquid sulfur surrounded by a shroud through which are formed a plurality of openings,
feeding said gas stream to said submerged location,
rotating said impeller about a substantially vertical axis at a speed corresponding to a blade tip velocity ($v_i$) of at least 150 in/sec (at least 4 m/s) so as to draw liquid sulfur into the interior of the shroud and to generate sufficient shear forces between said impeller and said plurality of openings in said shroud to distribute said gas stream as bubbles in said liquid sulfur to the interior of said shroud and to effect intimate contact of said gas stream and said liquid sulfur at said submerged location so as to form a gas-liquid mixture of bubbles of said gas in said liquid sulfur contained within said shroud while effecting shearing of said gas-liquid mixture within said shroud, and
flowing said gas-liquid mixture from within the interior of said shroud exclusively through said openings to external of said shroud at a gas velocity index (GVI) of at least 4 per second per opening in said shroud so as to effect further shearing of the gas-liquid mixture and further intimate contact of said gas stream and said liquid sulfur, whereby reaction is effected between hydrogen sulfide and sulfur dioxide contained in said gas stream in the presence of liquid sulfur to form sulfur,
said gas velocity index (GVI) being determined by the expression:

$$GVI = \frac{QP}{4nA^2}$$

where Q is the volumetric flow rate of gas into the impeller (m³/s), n is the number of openings in the shroud, A is the area of the opening (m²) and P is the length of the perimeter of the opening (m),
said method being carried out:

(a) at an Effective Shear Index (ESI) value of 1 to 6000 as determined by the relationship:

$$ESI = \frac{GVI}{v_i} \ X \ \frac{(D_s - D_i)}{2} \ X \ 100$$

where $D_s$ is inside diameter (m) of the shroud and $D_i$ is the outside diameter (m) of the impeller,
(b) at a Shear Effective Index (SEI) value of 1 to 25 as determined by the relationship:

$$SEI = \frac{Q}{\pi h D_i v_i} \ X \ 100$$

where h is the height of the impeller (m), and
(c) at a Density Index (DI) value of 1 to 8 as determined by the relationship:

$$DI = \frac{Q}{Q_i}\left[\frac{\rho_L - \rho_g}{\rho_{H2O} - \rho_{air}}\right]$$

where $Q_i$ is the self-induction flow rate of air into water ($m^3$/s), $\rho_L$ is the density of the liquid sulfur ($kg/m^3$), $\rho_g$ is the density of the gas ($kg/m^3$), $\rho_{H2O}$ is the density of water ($kg/m^3$) and $\rho_{air}$ is the density of air ($kg/m^3$).

5. The method claimed in claim 3 or 4, wherein said ESI value is determined at a $v_i$ value of at least 350 in/sec. (at least 9 m/s).

6. The method claimed in claim 3 or 5, wherein said SEI value is determined at $v_i$ value of at least 350 in/sec. (at least 9 m/s).

7. The method claimed in any one of claims 3, 5 or 6, wherein said ESI value is 10 to 250 and is carried out at a Shear Effectiveness Index (SEI) value of 4 to 5.

8. The method claimed in any one of claims 3 to 7, wherein said blade tip velocity is at least 350 in/sec (at least 9 m/s).

9. The method claimed in claim 8, wherein said blade tip velocity is at least 500 in/sec. (at least 12.5 m/s)

10. The method claimed in any one of claims 3 to 9, wherein said gas velocity index is at least 18 per second per opening.

11. The method claimed in claim 10, wherein said gas velocity index is at least 24 per second per opening.

12. The method claimed in claim 10, wherein said gas velocity index is from 30 to 500 per second per opening.

13. The method claimed in any one of claims 3 to 12, which is carried out at a Gas Displacement Index (GDI) value of -0.5 to 0.95 as determined by the relationship:

$$GDI = \frac{2V_i.\omega - Q}{2V_i.\omega}$$

where $V_i$ is the volume swept by the impeller ($m^3$), $\omega$ is the ratio of rotation of the impeller (rad/s) and Q is the volumetric flow rate of gas in the impeller ($m^3$/s).

14. The method claimed in any one of claims 3 to 13, which is carried out at a Mixing Index (MI) value of at least -5 as determined by the relationship:

$$MI = \frac{2V_i.\omega - Q}{V_r}$$

where $V_i$ is the volume swept by the impeller ($m^3$), $\omega$ is the rate of rotation of the impeller (rad/s), Q is the volumetric flow rate of gas to the impeller ($m^3$/s) and $V_r$ is the volume of the reactor ($m^3$).

15. The method claimed in claim 2 or 4, wherein said hydrogen sulfide and sulfur dioxide-containing gas stream is a tail gas stream from a Claus plant and wherein said Claus plant tail gas stream contains a stoichiometric excess of sulfur dioxide with respect to hydrogen sulfide to effect substantially complete conversion of hydrogen sulfide to sulfur in said liquid sulfur or said Claus plant tail gas stream contains sufficient oxygen to provide a stoichiometric quantity or excess of sulfur dioxide with respect to hydrogen sulfide in said liquid sulfur, whereby substantially all of the hydrogen sulfide and sulfur dioxide in said tail gas stream is removed in the liquid sulfur.

**16.** The method claimed in any one of claims 2, 4, or 15, wherein a catalyst for conversion of hydrogen sulfide to sulfur by reaction with sulfur dioxide is provided in said liquid sulfur at said submerged location.

**17.** The method of claim 16 wherein said catalyst is a Bronsted-Lowry base catalyst having a $pK_b$ value of less than 10.

**18.** The method claimed in claim 1 or 3, wherein said stripping gas is steam, an oxidizing gas, or a tail gas stream from a Claus plant.

**19.** The method claimed in claim 18, wherein said stripping gas is an oxidizing gas which is sulfur dioxide in sufficient quantity to convert substantially all hydrogen sulfide present in the liquid sulfur and produced by decomposition of hydrogen polysulfides to sulfur, or which is air.

**20.** The method claimed in claim 18, wherein said stripping gas is a tail gas stream from a Claus plant and said Claus plant tail gas stream contains a stoichiometric excess of sulfur dioxide with respect to hydrogen sulfide to effect substantially complete conversion of hydrogen sulfide to sulfur in said liquid sulfur or said Claus plant tail gas stream contains sufficient oxygen to provide a stoichiometric excess of sulfur dioxide with respect to hydrogen sulfide in said liquid sulfur.

**21.** The method claimed in claims 3 and 20, wherein said liquid sulfur is treated in a series of procedures as defined in claim 3 effected in series-connected vessels.

**22.** The method claimed in claim 1, wherein said Bronsted-Lowry base catalyst has a $pK_b$ value of less than 10.

**23.** The method claimed in claim 22, wherein said $pK_b$ value is less than 6.

**24.** The method claimed in claim 23, wherein said Bronsted-Lowry base catalyst comprises ammonia or an amine.

**25.** The method claimed in claim 24, wherein said amine is cyclohexylamine or morpholine.

**26.** The method claimed in claims 1 or 23 to 25, wherein said catalyst is used in an amount of 10 ppbw to 10 ppmw relative to the weight of sulfur.

**27.** The method claimed in claim 28, wherein said catalyst is employed in an amount from 1 to 5 ppmw relative to the weight of sulfur.

**28.** The method claimed in any one of claims 1, 2 and 17 to 29, wherein said Bronsted-Lowry base catalyst is provided at said submerged location by transportation thereto.

**29.** The method claimed in claim 30, wherein said transportation is effected by introducing said catalyst into the liquid sulfur flowing into a vessel containing the same and/or by introducing the catalyst into the vessel, so as to be transported to said submerged location by circulation of liquid sulfur in the vessel.

**30.** The method claimed in claim 30 or 31, wherein said transportation is effected by said stripping gas (claim 1) or said gas stream (claim 2), as the case may be.

**31.** The method as claimed in any one of claims 30 to 32, wherein said transportation is effected by introducing said catalyst directly into a vortex formed by said rotation of said impeller within the shroud.

**32.** The method claimed in any one of claims 17 to 31, wherein said Bronsted-Lowry base catalyst is a volatile amine soluble in said liquid sulfur to facilitate removal from said liquid sulfur.

**33.** The method claimed in any one of claims 1, 3 and 18 to 31, wherein said stripping gas has a temperature at least 20°C cooler than said liquid sulfur.

**34.** The method claimed in any one of claims 1, 3 and 18 to 33, wherein said stripping gas has a temperature of less than 100°C.

**35.** The method claimed in any one of claims 1 to 34 which is effected at a sulfur temperature of 120° to 160°C.

**36.** The method claimed in claim 35, wherein said sulfur temperature is 125° to 155°C.

**Patentansprüche**

**1.** Verfahren zum Entfernen von Wasserstoffsulfid und Hydrogenpolysulfiden aus flüssigem Schwefel, **gekennzeichnet durch**:

das Vorsehen eines Rotor-Impellers, umfassend eine Vielzahl von Blättern an einer untergetauchten Stelle in dem flüssigem Schwefel, umgeben **durch** einen Mantel, **durch** welchen hindurch eine Vielzahl von Öffnungen gebildet sind;

das Zuführen des Gasstroms zu der untergetauchten Stelle;

das Rotierenlassen des Impellers um eine praktisch senkrechte Achse mit einer Geschwindigkeit, die ausreichend ist, um flüssigen Schwefel in das Innere des Mantels abzuziehen und den Gasstrom als Bläschen in dem flüssigen Schwefel zum Inneren des Mantels zu verteilen und eine Gas-Flüssigkeits-Mischung von Bläschen des Gasstroms in dem darin enthaltenen flüssigen Schwefel innerhalb des Mantels zu bilden; und

das Strömenlassen der Gas-Flüssigkeits-Mischung aus dem Innern des Mantels ausschließlich **durch** die Öffnungen nach außerhalb des Mantels, und

das Entfernen des Abstrippgases von dem flüssigen Schwefel.

**2.** Verfahren zum Verarbeiten eines Wasserstoffsulfid und Schwefeldioxid enthaltenden Gasstroms zur Entfernung zumindest eines Teils der Komponenten aus diesem, **gekennzeichnet durch**:

das Vorsehen eines Rotor-Impellers, umfassend eine Vielzahl von Blättern an einer untergetauchten Stelle in flüssigem Schwefel, umgeben **durch** einen Mantel, **durch** welchen hindurch eine Vielzahl von Öffnungen gebildet sind;

das Zuführen des Gasstroms zu der untergetauchten Stelle;

das Rotierenlassen des Impellers um eine praktisch senkrechte Achse mit einer Geschwindigkeit, die ausreichend ist, um flüssigen Schwefel in das Innere des Mantels abzuziehen und den Gasstrom als Bläschen in dem flüssigen Schwefel zum Inneren des Mantels zu verteilen und eine Gas-Flüssigkeits-Mischung von Bläschen des Gasstroms in dem darin enthaltenen flüssigen Schwefel innerhalb des Mantels zu bilden; und

das Strömenlassen der Gas-Flüssigkeits-Mischung aus dem Innern des Mantels ausschließlich **durch** die Öffnungen nach außerhalb des Mantels, um **dadurch** eine Reaktion zwischen Wasserstoffsulfid und Schwefeldioxid zu Schwefel zu bewirken.

**3.** Verfahren zum Entfernen von Wasserstoffsulfid und Wasserstoffpolysulfiden aus flüssigem Schwefel, **gekennzeichnet durch**:

das Vorsehen eines Rotor-Impellers, umfassend eine Vielzahl von Blättern an einer untergetauchten Stelle in dem flüssigen Schwefel, umgeben **durch** einen Mantel, **durch** welchen hindurch eine Vielzahl von Öffnungen gebildet sind;

das Zuführen eines Abstrippgases für Wasserstoffsulfid zu der untergetauchten Stelle;

das Rotierenlassen des Impellers um eine praktisch senkrechte Achse mit einer Geschwindigkeit, die der Geschwindigkeit an der Blattspitze ($v_i$) von mindestens 150 In./s (mindestens 4 m/s) entspricht, um so flüssigen Schwefel in das Innere des Mantels abzuziehen und ausreichende Scherkräfte zwischen dem Impeller und der Vielzahl an Öffnungen in dem Mantel zu erzeugen, um das Abstrippgas als Bläschen in dem flüssigen Schwefel zum Inneren des Mantels zu verteilen und einen innigen Kontakt des Gases und des flüssigen Schwefels an der untergetauchten Stelle zu bewirken, um eine Gas-Flüssigkeits-Mischung von Bläschen des Gases in dem innerhalb des Mantels enthaltenen flüssigen Schwefel zu bilden, unter gleichzeitiger Bewirkung eines Scherens der Gas-Flüssigkeits-Mischung innerhalb des Mantels; und

das Strömenlassen der Gas-Flüssigkeits-Mischung aus dem Innern des Mantels ausschließlich **durch** die Öffnungen nach außerhalb des Mantels bei einem Gasgeschwindigkeitsindex (GVI) von mindestens 4 pro Sekunde pro Öffnung in dem Mantel, um ein weiteres Scheren der Gas-Flüssigkeits-Mischung und den weiteren innigen Kontakt des Gases und des flüssigen Schwefels zu bewirken,

wobei der Gasgeschwindigkeitsindex (GVI) ermittelt wird **durch** den Ausdruck:

$$GVI = \frac{QP}{4nA^2}$$

worin Q die volumetrische Strömungsrate von Gas in den Impeller ist ($m^3/s$), n die Anzahl der Öffnungen in dem Mantel ist, A die Fläche der Öffnung ($m^2$) ist und P die Länge des Perimeters der Öffnung (m) ist, wobei das Verfahren durchgeführt wird:

(a) bei einem wirksamen Scherindex-(ESI-)Wert von 1 bis 6000, wie **durch** die Beziehung

$$ESI = \frac{GVI}{v_i} \times \frac{(D_s - D_i)}{2} \times 100$$

bestimmt, worin $D_s$ der Innendurchmesser (m) des Mantels ist und $D_i$ der Außendurchmesser (m) des Impellers ist;

(b) bei einem effektiven Scherindex-(SEI-)Wert von 1 bis 25, wie **durch** die Beziehung:

$$SEI = \frac{Q}{\pi h D_i v_i} \times 100$$

ermittelt, worin h die Höhe des Impellers (m) ist; und

(c) bei einem Dichteindex-(DI-)Wert von 1 bis 8, wie **durch** die Beziehung:

$$DI = \frac{Q}{Q_i} \left[ \frac{p_L - p_g}{p_{H_2O} - p_{Luft}} \right]$$

ermittelt, worin $Q_i$ die Selbstinduktions-Strömungsrate von Luft in Wasser ist ($m^3/s$), $\rho_L$ die Dichte des flüssigen Schwefels ist ($kg/m^3$), $\rho_g$ die Dichte des Gases ist ($kg/m^3$), $\rho_{H2O}$ die Dichte von Wasser ist ($kg/m^3$) und $\rho_{air}$ die Dichte von Luft ist ($kg/m^3$).

**4.** Verfahren zum Verarbeiten eines Wasserstoffsulfid und Schwefeldioxid enthaltenden Gasstroms, **gekennzeichnet durch**:

das Vorsehen eines Rotor-Impellers, umfassend eine Vielzahl von Blättern an einer untergetauchten Stelle in flüssigem Schwefel, umgeben **durch** einen Mantel, **durch** welchen hindurch eine Vielzahl von Öffnungen gebildet sind;

das Zuführen das Gasstroms zu der untergetauchten Stelle;

das Rotierenlassen des Impellers um eine praktisch senkrechte Achse mit einer Geschwindigkeit, die der Geschwindigkeit an der Blattspitze ($v_i$) von mindestens 150 In./s (mindestens 4 m/s) entspricht, um so flüssigen Schwefel in das Innere des Mantels abzuziehen und ausreichende Scherkräfte zwischen dem Impeller und der Vielzahl an Öffnungen in dem Mantel zu erzeugen, um das Abstrippgas als Bläschen in dem flüssigen Schwefel zum Inneren des Mantels zu verteilen und einen innigen Kontakt des Gases und des flüssigen Schwefels an der untergetauchten Stelle zu bewirken, um eine Gas-Flüssigkeits-Mischung von Bläschen des Gasstroms in dem in dem Mantel enthaltenen flüssigen Schwefel zu bilden, unter gleichzeitiger Bewirkung eines Scherens der Gas-Flüssigkeits-Mischung innerhalb des Mantels; und

das Strömenlassen der Gas-Flüssigkeits-Mischung aus dem Innern des Mantels ausschließlich **durch** die Öffnungen nach außerhalb des Mantels bei einem Gasgeschwindigkeitsindex (GVI) von mindestens 4 pro Sekunde pro Öffnung in dem Mantel, um ein weiteres Scheren der Gas-Flüssigkeits-Mischung und den weiteren innigen Kontakt des Gases und des flüssigen Schwefels zu bewirken, wodurch eine Reaktion zwischen dem in dem Gasstrom enthaltenen Wasserstoffsulfid und Schwefeldioxid in Gegenwart von flüssigem Schwefel unter Bildung von Schwefel bewirkt wird,

wobei der Gasgeschwindigkeitsindex (GVI) ermittelt wird **durch** den Ausdruck:

$$GVI = \frac{QP}{4nA^2}$$

worin Q die volumetrische Strömungsrate von Gas in den Impeller ist ($m^3/s$), n die Anzahl der Öffnungen in dem Mantel ist, A die Fläche der Öffnung ($m^2$) ist und P die Länge des Perimeters der Öffnung (m) ist,
wobei das Verfahren durchgeführt wird:

(a) bei einem wirksamen Scherindex-(ESI-)Wert von 1 bis 6000, wie **durch** die Beziehung

$$ESI = \frac{GVI}{v_i} \times \frac{(D_s - D_i)}{2} \times 100$$

bestimmt, worin $D_s$ der Innendurchmesser (m) des Mantels ist und $D_i$ der Außendurchmesser (m) des Impellers ist,
(b) bei einem effektiven Scherindex-(SEI-)Wert von 1 bis 25, wie **durch** die Beziehung:

$$SEI = \frac{Q}{\pi h D_i v_i} \times 100$$

ermittelt, worin h die Höhe des Impellers (m) ist; und
(c) bei einem Dichteindex-(DI-)Wert von 1 bis 8, wie **durch** die Beziehung:

$$DI = \frac{Q}{Q_i} \left[ \frac{p_L - p_g}{p_{H_2O} - p_{Luft}} \right]$$

ermittelt, worin $Q_i$ die Selbstinduktions-Strömungsrate von Luft in Wasser ist ($m^3/s$), $\rho_L$ die Dichte des flüssigen Schwefels ist ($kg/m^3$), $\rho_g$ die Dichte des Gases ist ($kg/m^3$), $\rho_{H2O}$ die Dichte von Wasser ist ($kg/m^3$) und $\rho_{air}$ die Dichte von Luft ist ($kg/m^3$).

5. Verfahren nach Anspruch 3 oder 4, wobei der ESI-Wert bei einem $v_i$-Wert von mindestens 350 In./s (mindestens 9 m/s) ermittelt wird.

6. Verfahren nach Anspruch 3 oder 5, wobei der SEI-Wert bei einem $v_i$-Wert von mindestens 350 In./s (mindestens 9 m/s) ermittelt wird.

**7.** Verfahren nach mindestens einem der Ansprüche 3, 5 und 6, wobei der ESI-Wert 10 bis 250 ist und das bei einem effektiven Scherindex-(SEI-)Wert von 4 bis 5 durchgeführt wird.

**8.** Verfahren nach einem der Ansprüche 3 bis 7, wobei die Geschwindigkeit an der Blattspitze mindestens 350 In./s (mindestens 9 m/s) beträgt.

**9.** Verfahren nach Anspruch 8, wobei die Geschwindigkeit an der Blattspitze mindestens 500 In./s (mindestens 12,5 m/s) beträgt.

**10.** Verfahren nach mindestens einem der Ansprüche 3 bis 7, wobei der Gasgeschwindigkeitsindex mindestens 18 pro Sekunde pro Öffnung beträgt.

**11.** Verfahren nach Anspruch 7 - 10, wobei der Gasgeschwindigkeitsindex mindestens 24 pro Sekunde pro Öffnung beträgt.

**12.** Verfahren nach Anspruch 7 - 10, wobei der Gasgeschwindigkeitsindex 30 bis 500 pro Sekunde pro Öffnung beträgt.

**13.** Verfahren nach mindestens einem der Ansprüche 3 bis 12, welches bei einem Gas-Verdrängungsindex-(GDI-) Wert von -0,5 bis 0,95 durchgeführt wird, wie durch die Beziehung:

$$GDI = \frac{2V_i.\omega - Q}{2V_i.\omega}$$

ermittelt, worin $V_i$ das durch den Impeller verdrängte Volumen ist ($m^3$), $\omega$ die Verhältniszahl der Rotation des Impellers ist (rad/s) und Q die volumetrische Strömungsrate von Gas in dem Impeller ist ($m^3$/s).

**14.** Verfahren nach mindestens einem der Ansprüche 3 bis 13, welches bei einem Mischindex-(MI-)Wert von mindestens -5 durchgeführt wird, wie durch die Beziehung:

$$MI = \frac{2V_i.\omega - Q}{V_r}$$

ermittelt, worin $V_i$ das durch den Impeller verdrängte Volumen ist ($m^3$), $\omega$ die Rotationsgeschwindigkeit des Impellers ist (rad/s), Q die volumetrische Strömungsrate von Gas zu dem Impeller ist ($m^3$/s) und $V_r$ das Volumen des Reaktors ist ($m^3$).

**15.** Verfahren nach Anspruch 2 oder 4, wobei der Wasserstoffsulfid und Schwefeldioxid enthaltende Gasstrom ein Abgas- bzw. Restgasstrom aus einer Claus-Anlage ist und wobei der Claus-Anlagen-Abgasstrom einen stöchiometrischen Überschuss an Schwefeldioxid bezüglich Wasserstoffsulfid enthält, um praktisch eine vollständige Umwandlung von Wasserstoffsulfid zu Schwefel in dem flüssigen Schwefel zu bewirken, oder der Claus-Anlagen-Abgasstrom ausreichend Sauerstoff enthält, um eine stöchiometrische Menge oder einen Überschuss an Schwefeldioxid bezüglich Wasserstoffsulfid in dem flüssigen Schwefel vorzusehen, wodurch praktisch das gesamte Wasserstoffsulfid und Schwefeldioxid in dem Abgasstrom in dem flüssigen Schwefel entfernt wird.

**16.** Verfahren nach einem der Ansprüche 2, 4 oder 15, wobei ein Katalysator zur Umwandlung von Wasserstoffsulfid zu Schwefel durch Umsetzung mit Schwefeldioxid in dem flüssigen Schwefel an der untergetauchten Stelle vorgesehen wird.

**17.** Verfahren nach Anspruch 16, wobei der Katalysator ein Brönsted-Lowry-Base-Katalysator mit einem $pK_b$-Wert von weniger als 10 ist.

**18.** Verfahren nach Anspruch 1 oder 3, wobei das Abstrippgas ein Dampf-, ein Oxidationsgas- oder ein Abgasstrom aus einer Claus-Anlage ist.

**19.** Verfahren nach Anspruch 18, wobei das Abstrippgas ein Oxidationsgas ist, welches Schwefeldioxid in einer ausreichenden Menge ist, um praktisch das gesamte in dem flüssigen Schwefel vorliegende Wasserstoffsulfid umzuwandeln, und welches durch die Aufspaltung von Wasserstoffpolysulfiden zu Schwefel gebildet wird, oder welches Luft ist.

**20.** Verfahren nach Anspruch 18, wobei das Abstrippgas ein Abgasstrom aus einer Claus-Anlage ist und der Claus-Anlagen-Abgasstrom einen stöchiometrischen Überschuss an Schwefeldioxid bezüglich Wasserstoffsulfid enthält, um praktisch eine vollständige Umwandlung von Wasserstoffsulfid zu Schwefel in dem flüssigen Schwefel zu bewirken, oder der Claus-Anlagen-Abgasstrom ausreichend Sauerstoff enthält, um einen stöchiometrischen Überschuss an Schwefeldioxid bezüglich Wasserstoffsulfid in dem flüssigen Schwefel vorzusehen.

**21.** Verfahren nach Anspruch 3 und 20, wobei der flüssige Schwefel in einer Reihe von Prozeduren, wie in Anspruch 3 definiert, behandelt wird, die in der Reihe nach verbundenen Gefäßen durchgeführt werden.

**22.** Verfahren nach Anspruch 1, wobei der Brönsted-Lowry-Base-Katalysator einen $pK_b$-Wert von weniger als 10 besitzt.

**23.** Verfahren nach Anspruch 22, wobei der $pK_b$-Wert weniger als 6 beträgt.

**24.** Verfahren nach Anspruch 23, wobei der Brönsted-Lowry-Base-Katalysator Ammoniak oder ein Amin umfasst.

**25.** Verfahren nach Anspruch 24, wobei das Amin Cyclohexylamin oder Morpholin ist.

**26.** Verfahren nach Anspruch 1 oder 23 bis 25, wobei der Katalysator in einer Menge von 10 ppbw bis 10 ppmw bezüglich des Gewichts von Schwefel verwendet wird.

**27.** Verfahren nach Anspruch 28, wobei der Katalysator in einer Menge von 1 bis 5 ppmw bezüglich des Gewichts von Schwefel verwendet wird.

**28.** Verfahren nach einem der Ansprüche 1, 2 und 17 bis 29, wobei der Brönsted-Lowry-Base-Katalysator an der untergetauchten Stelle durch Transportieren dorthin vorgesehen wird.

**29.** Verfahren nach Anspruch 30, wobei der Transport durch Einführen des Katalysators in den flüssigen Schwefel, welcher in ein selbigen enthaltendes Gefäß strömt, und/oder durch Einführen des Katalysators in das Gefäß bewirkt wird, um so zu der untergetauchten Stelle durch Zirkulation von flüssigem Schwefel in dem Gefäß transportiert zu werden.

**30.** Verfahren nach Anspruch 30 oder 31, wobei der Transport je nach dem vorliegenden Fall durch das Abstrippgas (Anspruch 1) oder den Gassstrom (Anspruch 2) bewirkt wird.

**31.** Verfahren nach einem der Ansprüche 30 bis 32, wobei der Transport durch Einführen des Katalysators direkt in einen durch die Rotation des Impellers in dem Mantel erzeugten Strudel bewirkt wird.

**32.** Verfahren nach einem der Ansprüche 17 bis 31, wobei der Brönsted-Lowry-Base-Katalysator ein in dem flüssigen Schwefel lösliches flüchtiges Amin ist, um die Entfernung bzw. Abführung des flüssigen Schwefels zu erleichtern.

**33.** Verfahren nach einem der Ansprüche 1, 3 und 18, wobei das Abstrippgas eine um mindestens 20°C kühlere Temperatur als der flüssige Schwefel besitzt.

**34.** Verfahren nach einem der Ansprüche 1, 3 und 18 bis 33, wobei das Abstrippgas eine Temperatur von weniger als 100°C besitzt.

**35.** Verfahren nach einem der Ansprüche 1 bis 34, welches bei einer Schwefel-Temperatur von 120° bis 160°C durchgeführt wird.

**36.** Verfahren nach Anspruch 35, wobei die Schwefel-Temperatur 125° bis 155°C beträgt.

**Revendications**

1. Procédé d'extraction d'acide sulfhydrique et de polysulfures d'hydrogène de soufre liquide, **caractérisé par** :

   la disposition d'une roue rotative ayant plusieurs ailettes à un emplacement immergé dans le soufre liquide et entouré par un capot dans lequel sont formées plusieurs ouvertures,
   la transmission d'un gaz d'extraction d'acide sulfhydrique de l'emplacement immergé avec disposition d'un catalyseur basique de Bronsted-Lowry pour la conversion, sur celui-ci, des polysulfures d'hydrogène en acide sulfhydrique,
   l'entraînement en rotation de la roue autour d'un axe pratiquement vertical à une vitesse suffisante pour que le soufre liquide soit aspiré à l'intérieur du capot et que le gaz d'extraction soit réparti sous forme de bulles dans le soufre liquide vers l'intérieur du capot avec formation d'un mélange gaz-liquide avec les bulles du gaz dans le soufre liquide contenu à l'intérieur du capot,
   la circulation du mélange gaz-liquide de l'intérieur du capot exclusivement par les ouvertures vers l'extérieur du capot, et
   l'élimination du gaz d'extraction du soufre liquide.

2. Procédé de traitement d'un courant gazeux contenant de l'acide sulfhydrique et de l'anhydride sulfureux pour l'élimination de l'un au moins de ces composés du courant, **caractérisé par**

   la disposition d'une roue rotative ayant plusieurs ailettes à un emplacement immergé dans le soufre liquide et entouré par un capot dans lequel sont formées plusieurs ouvertures,
   la transmission du courant gazeux à l'emplacement immergé,
   l'entraînement en rotation de la roue autour d'un axe pratiquement vertical à une vitesse suffisante pour que le soufre liquide soit aspiré à l'intérieur du capot et que le gaz d'extraction soit réparti sous forme de bulles dans le soufre liquide vers l'intérieur du capot avec formation d'un mélange gaz-liquide avec les bulles du gaz dans le soufre liquide contenu à l'intérieur du capot, et
   la circulation du mélange gaz-liquide de l'intérieur du capot exclusivement par les ouvertures vers l'extérieur du capot, si bien qu'une réaction entre l'acide sulfhydrique et l'anhydride sulfureux avec formation de soufre est exécutée.

3. Procédé d'élimination d'acide sulfhydrique et de polysulfures d'hydrogène de soufre liquide, **caractérisé par** :

   la disposition d'une roue rotative ayant plusieurs ailettes à un emplacement immergé dans le soufre liquide, entouré par un capot dans lequel sont formées plusieurs ouvertures,
   la transmission d'un gaz d'extraction d'anhydride sulfurique à l'emplacement immergé,
   l'entraînement en rotation de la roue autour d'un axe pratiquement vertical à une vitesse qui correspond à une vitesse du bout des ailettes ($v_i$) d'au moins 4 m/s (150 pouces par seconde) afin que le soufre liquide soit aspiré à l'intérieur du capot et que les forces de cisaillement créées entre la roue et les ouvertures du capot soient suffisantes pour que le gaz d'extraction soit distribué sous forme de bulles dans le soufre liquide vers l'intérieur du capot et pour qu'un contact intime entre le gaz et le soufre liquide soit effectué à l'emplacement immergé, pour la formation d'un mélange gaz-liquide de bulles de gaz dans le soufre liquide contenu à l'intérieur du capot, avec application d'un gradient de vitesse au mélange gaz-liquide à l'intérieur du capot, et
   la circulation du mélange gaz-liquide depuis l'intérieur du capot exclusivement par les ouvertures vers l'extérieur du capot avec un indice de vitesse de gaz (GVI) d'au moins 4 par seconde par ouverture du capot, afin qu'un gradient de vitesse soit en outre appliqué au mélange gaz-liquide et qu'un contact intime soit assuré entre le gaz et le soufre liquide,
   l'indice de vitesse du gaz (GVI) étant déterminé par l'expression :

$$GVI = \frac{QP}{4nA^2}$$

   Q étant le débit volumétrique de gaz dans la roue ($m^3$/s), n le nombre d'ouvertures du capot, A la section de l'ouverture ($m^2$) et P la longueur du périmètre de l'ouverture (m),
   le procédé étant exécuté

   (a) à une valeur de l'indice efficace de cisaillement (ESI) comprise entre 1 et 6 000, cette valeur étant déterminée par la relation :

$$ESI = \frac{GVI}{v_i} \times \frac{(D_s - D_i)}{2} \times 100$$

$D_s$ étant le diamètre interne (m) du capot et $D_i$ le diamètre externe (m) de la roue,
(b) à une valeur de l'indice efficace de cisaillement (SEI) comprise entre 1 et 25 telle que déterminée par la relation :

$$SEI = \frac{Q}{\pi h D_i v_i} \times 100$$

h étant la hauteur de la roue (m), et
(c) à une valeur d'un indice de densité (DI) comprise entre 1 et 8, cette valeur étant déterminée par la relation :

$$DI = \frac{Q}{Q_i} \left| \frac{\rho_L - \rho_g}{\rho_{H2O} - \rho_{air}} \right|$$

$Q_i$ étant le débit d'aspiration propre de l'air dans l'eau (m³/s), $\rho_L$ étant la masse volumique du soufre liquide (kg/m³), $\rho_g$ étant la masse volumique du gaz (kg/m³), $\rho_{H2O}$ étant la masse volumique de l'eau (kg/m³), et $\rho_{air}$ étant la masse volumique de l'air (kg/m³).

4. Procédé de traitement d'un courant gazeux contenant de l'acide sulfhydrique et de l'anhydride sulfureux, **caractérisé par** :

la disposition d'une roue rotative ayant plusieurs ailettes à un emplacement immergé dans le soufre liquide, entouré par un capot dans lequel sont formées plusieurs ouvertures,
la transmission du courant gazeux à l'emplacement immergé,
l'entraînement en rotation de la roue autour d'un axe pratiquement vertical à une vitesse qui correspond à une vitesse du bout des ailettes ($v_i$) d'au moins 4 m/s (150 pouces par seconde) afin que le soufre liquide soit aspiré à l'intérieur du capot et que les forces de cisaillement créées entre la roue et les ouvertures du capot soient suffisantes pour que le gaz d'extraction soit distribué sous forme de bulles dans le soufre liquide vers l'intérieur du capot et pour qu'un contact intime entre le gaz et le soufre liquide soit effectué à l'emplacement immergé, pour la formation d'un mélange gaz-liquide de bulles de gaz dans le soufre liquide contenu à l'intérieur du capot, avec application d'un gradient de vitesse au mélange gaz-liquide à l'intérieur du capot, et
la circulation du mélange gaz-liquide depuis l'intérieur du capot exclusivement par les ouvertures vers l'extérieur du capot avec un indice de vitesse de gaz (GVI) d'au moins 4 par seconde par ouverture du capot, afin qu'un gradient de vitesse soit en outre appliqué au mélange gaz-liquide et qu'un contact intime soit assuré entre le gaz et le soufre liquide, telle qu'une réaction est exécutée entre l'acide sulfhydrique et l'anhydride sulfureux contenu dans le courant gazeux en présence de soufre liquide pour la formation de soufre.
l'indice de vitesse du gaz (GVI) étant déterminé par l'expression :

$$GVI = \frac{QP}{4nA^2}$$

Q étant le débit volumétrique de gaz dans la roue (m³/s) n le nombre d'ouvertures du capot, A la section de l'ouverture (m²) et P la longueur du périmètre de l'ouverture (m),
le procédé étant exécuté

(a) à une valeur de l'indice efficace de cisaillement (ESI) comprise entre 1 et 6 000, cette valeur étant déterminée par la relation :

$$ESI = \frac{GVI}{v_i} \times \frac{(D_s - D_i)}{2} \times 100$$

$D_s$ étant le diamètre interne (m) du capot et $D_i$ le diamètre externe (m) de la roue,
(b) à une valeur de l'indice efficace de cisaillement (SEI) comprise entre 1 et 25 telle que déterminée par la relation :

$$SEI = \frac{Q}{\pi h D_i v_i} \times 100$$

h étant la hauteur de la roue (m), et
(c) à une valeur d'un indice de densité (DI) comprise entre 1 et 8, cette valeur étant déterminée par la relation :

$$DI = \frac{Q}{Q_i}\left|\frac{\rho_L - \rho_g}{\rho_{H2O} - \rho_{air}}\right|$$

$Q_i$ étant le débit d'aspiration propre de l'air dans l'eau (m$^3$/s), $\rho_L$ étant la masse volumique du soufre liquide (kg/m$^3$), $\rho_g$ étant la masse volumique du gaz (kg/m$^3$), $\rho_{H2O}$ étant la masse volumique de l'eau (kg/m$^3$), et $\rho_{air}$ étant la masse volumique de l'air (kg/m$^3$).

5. Procédé selon la revendication 3 ou 4, dans lequel la valeur ESI est déterminée à une valeur $v_i$ d'au moins 9 m/ s (350 pouces par seconde).

6. Procédé selon la revendication 3 ou 5, dans lequel la valeur SEI est déterminée pour une valeur $v_i$ d'au moins 9 m/s (350 pouces par seconde).

7. Procédé selon l'une quelconque des revendications 3, 5 et 6, dans lequel la valeur ESI est comprise entre 10 et 250 et le procédé est mis en oeuvre à une valeur de l'indice d'efficacité de cisaillement (SEI) comprise entre 4 et 5.

8. Procédé selon l'une quelconque des revendications 3 à 7, dans lequel la vitesse du bout des ailettes est d'au moins 9 m/s (350 pouces par seconde).

9. Procédé selon la revendication 8, dans lequel la vitesse au bout des ailettes est d'au moins 12,5 m/s (500 pouces par seconde).

10. Procédé selon l'une quelconque des revendications 3 à 9, dans lequel l'indice de vitesse du gaz est d'au moins 18 par seconde et par ouverture.

11. Procédé selon la revendication 10, dans lequel l'indice de vitesse du gaz est d'au moins 24 par seconde et par ouverture.

12. Procédé selon la revendication 10, dans lequel l'indice de vitesse du gaz est compris entre 300 et 500 par seconde et par ouverture.

13. Procédé selon l'une quelconque des revendications 4 à 12, qui est exécuté avec une valeur d'indice de déplacement de gaz (GDI) comprise entre -0,5 et 0,95, déterminée par la relation :

$$GDI = \frac{2V_i.\omega - Q}{2V_i.\omega}$$

$V_i$ étant le volume balayé par la roue (m$^3$), $\omega$ le rapport de rotation de la roue (rad/s) et Q le débit volumétrique de

EP 0 717 720 B1

gaz dans la roue ($m^3$/s).

14. Procédé selon l'une quelconque des revendications 3 à 13, exécuté avec une valeur d'indice de mélange (MI) au moins égale à -5, déterminée par la relation :

$$MI = \frac{2V_i.\omega - Q}{V_r}$$

$V_i$ étant le volume balayé par la roue ($m^3$), $\omega$ la vitesse de rotation (rad/s), Q le débit volumétrique de gaz vers la roue ($m^3$/s) et $V_r$ le volume du réacteur ($m^3$).

15. Procédé selon la revendication 2 ou 4, dans lequel le courant de gaz contenant l'acide sulfhydrique et l'anhydride sulfureux est un courant de gaz de queue d'une installation Claus, et dans lequel le courant de gaz de queue de l'installation Claus contient un excès stoechiométrique d'anhydride sulfureux par rapport à l'acide sulfhydrique afin qu'une conversion pratiquement complète d'acide sulfhydrique en soufre soit réalisée dans le soufre liquide, ou le courant de gaz de queue de l'installation Claus contient suffisamment d'oxygène pour qu'il donne une quantité stoechiométrique d'anhydride sulfureux ou un excès par rapport à l'acide sulfhydrique dans le soufre liquide, si bien que la totalité pratiquement de l'acide sulfhydrique et de l'anhydride sulfureux du courant de gaz de queue est retirée dans le soufre liquide.

16. Procédé selon l'une des revendications 2, 4 et 15, dans lequel un catalyseur de conversion de l'acide sulfhydrique en soufre par réaction avec l'anhydride sulfureux est incorporé au soufre liquide à l'emplacement immergé.

17. Procédé selon la revendication 16, dans lequel le catalyseur est un catalyseur basique de Bronsted-Lowry ayant une valeur $pK_b$ inférieure à 10.

18. Procédé selon la revendication 1 ou 3, dans lequel le gaz d'extraction est la vapeur d'eau, un gaz oxydant ou un courant de gaz de queue d'une installation Claus.

19. Procédé selon la revendication 18, dans lequel le gaz d'extraction est un gaz oxydant qui est l'anhydride sulfureux en quantité suffisante pour transformer la totalité pratiquement de l'acide sulfhydrique présent dans le soufre liquide et produit par décomposition de polysulfures d'hydrogène en soufre, ou qui est l'air.

20. Procédé selon la revendication 18, dans lequel le gaz d'extraction est un courant de gaz de queue d'une installation Claus et le courant de gaz de queue de l'installation Claus contient un excès stoechiométrique d'anhydride sulfureux par rapport à l'acide sulfhydrique afin que la conversion de l'acide sulfhydrique en soufre dans le soufre liquide soit pratiquement totale, ou le courant de gaz de queue de l'installation Claus contient suffisamment d'oxygène pour donner un excès stoechiométrique d'anhydride sulfureux par rapport à l'acide sulfhydrique dans le soufre liquide.

21. Procédé selon les revendications 3 et 20, dans lequel le soufre liquide est traité par une série de procédures telles que définies dans la revendication 3, réalisées dans des récipients raccordés en série.

22. Procédé selon la revendication 1, dans lequel le catalyseur basique de Bronsted-Lowry a une valeur $pK_b$ inférieure à 10.

23. Procédé selon la revendication 22, dans lequel la valeur $pK_b$ est inférieure à 6.

24. Procédé selon la revendication 23, dans lequel le catalyseur basique de Bronsted-Lowry est l'ammoniac ou une amine.

25. Procédé selon la revendication 24, dans lequel l'amine est la cyclohexylamine ou la morpholine.

26. Procédé selon les revendications 1 ou 23 à 25, dans lequel le catalyseur est utilisé en quantité comprise entre 10 ppb et 10 ppm en poids par rapport au poids de soufre.

27. Procédé selon la revendication 28, dans lequel le catalyseur est utilisé en quantité comprise entre 1 et 5 ppm en poids par rapport au poids de soufre.

28. Procédé selon l'une quelconque des revendications 1, 2 et 17, dans lequel le catalyseur basique de Bronsted-Lowry est disposé à l'emplacement immergé par transport vers celui-ci.

29. Procédé selon la revendication 28, dans lequel le transport est réalisé par introduction du catalyseur dans le soufre liquide qui s'écoule dans un récipient contenant celui-ci et/ou par introduction du catalyseur dans le récipient afin qu'il soit transporté vers l'emplacement immergé par la circulation du soufre liquide dans le récipient.

30. Procédé selon la revendication 28 ou 29, dans lequel le transport est réalisé par le gaz d'extraction (revendication 1) ou le courant gazeux (revendication 2) selon le cas.

31. Procédé selon l'une quelconque des revendications 28 à 30, dans lequel le transport est réalisé par introduction du catalyseur directement dans un tourbillon formé par rotation de la roue à l'intérieur du capot.

32. Procédé selon l'une quelconque des revendications 17 à 31, dans lequel le catalyseur basique de Bronsted-Lowry est une amine volatile soluble dans le soufre liquide afin que l'élimination du soufre liquide soit plus facile.

33. Procédé selon l'une quelconque des revendications 1, 3 et 18 à 31, dans lequel le gaz d'extraction a une température inférieure d'au moins 20 °C à celle du soufre liquide.

34. Procédé selon l'une quelconque des revendications 1, 3 et 18 à 33, dans lequel le gaz d'extraction a une température inférieure à 100 °C.

35. Procédé selon l'une quelconque des revendications 1 à 34, mis en oeuvre à une température du soufre comprise entre 120 et 160 °C.

36. Procédé selon la revendication 35, dans lequel la température du soufre est comprise entre 125 et 155 °C.

FIG.1

FTIR Spectrum of Liquid Sulphur With Residual $H_2S$ and $H_2S_x$

$H_2S_x$, 18.7 ppmw

$H_2S$, 43.4 ppmw

Wavenumbers (cm-1)

FIG.2.

Concentration Decrease of $H_2$ S and $H_2$ $S_x$
Pilot-scale Contactor Using Air Sweep

concentration, ppmw

$H_2 S_x$ half life = 48 min.

$H_2$ S half life < 1 min.

time, minutes

FIG.3.

Effluent [H₂S] vs. Time
Pilot-scale Contactor Using Air Stripping Gas

FIG.4.

Effect of Catalyst on the $H_2 S_x$ Concentration Reduction Rate.
Bench-scale contactor using air stripping gas

FIG.5.

History of $H_2S$ and $H_2S_x$ Peaks of FIG.5.

| precatalyst injection | injection +23 sec | + 46 sec |
| + 66 sec | + 96 sec | + 240 sec |

Wavenumbers (cm-1)

FIG.6.

EP 0 717 720 B1

History of $H_2S$ and $H_2S_x$ Peaks Using the Pilot-scale Contactor

Initial Sample

$H_2S$

$H_2S_x$

other volatiles

Sample 70 seconds After Catalyst Addition

$H_2S$

$H_2S_x$

3800 3600 3400 3200 3000 2800 2600 2400 2200 2000 1800 1600 1400 1200
Wavenumbers (cm-1)

FIG.7.

EP 0 717 720 B1

Typical Spectra of Feed and Product Samples for a Steady-State Flowthrough Test

Feed Sample

flowrate = 41.1 TPH
sulphur temperature = 152° C.
catalyst concentration = 4.8 ppmw

$H_2S_x$

$H_2S$

Product Sample

other volatiles

70 % overall decrease
(2.5 min residence time)

$H_2S$ $H_2S_x$

3800 3600 3400 3200 3000 2800 2600 2400 2200 2000 1800 1600 1400 1200
Wavenumbers (cm-1)

FIG.8.

H$_2$S$_X$ Half-life vs Catalyst Concentration
Pilot-scale Contactor, Continuous Flow Through Tests

FIG.9.

Spectra of Feed and Well Degassed Product

Initial Feed
Sample

$[H_2 S] = 82.1$ ppmw
$[H_2 S_x] = 18.6$ ppmw

$[H_2 S] < 2$ ppmw
$[H_2 S_x] < 2$ ppmw

Final (degassed) Sample

Wavenumbers (cm-1)

F I G . 10 .

FIG.11.